# EUROPÄISCHE PATENTSCHRIFT

(11) **EP 3 974 932 B1**
(45) Veröffentlichungstag und Bekanntmachung des Hinweises auf die Patenterteilung: **23.08.2023**
(21) Anmeldenummer: 21197031.4
(22) Anmeldetag: 16.09.2021
(51) Int. Cl.: G05D 1/02, A47L 11/40, G05D 1/00

(54) **ROBOTERSYSTEM UND VERFAHREN ZUR STEUERUNG EINES ANGETRIEBEN BEWEGBAREN ROBOTERS EINES ROBOTERSYSTEMS**
ROBOT SYSTEM AND METHOD FOR CONTROLLING A DRIVEN MOBILE ROBOT OF A ROBOT SYSTEM
SYSTÈME ROBOTIQUE ET PROCÉDÉ DE COMMANDE D'UN ROBOT MOBILE ENTRAINÉ D'UN SYSTÈME ROBOTIQUE

(30) Priorität: 24.09.2020 DE 102020211969
(43) Veröffentlichungstag der Anmeldung: 30.03.2022
(73) Patentinhaber: Robert Bosch GmbH, 70442 Stuttgart (DE)
(72) Erfinder: Schirmer, Robert, 75328 Schoemberg (DE)

(56) Entgegenhaltungen:
- WO-A1-2019/135518
- US-A1- 2014 207 280
- US-A1- 2018 074 508

## Beschreibung

### Stand der Technik

Es ist bereits ein Robotersystem vorgeschlagen worden, mit zumindest einem angetrieben bewegbaren Roboter, der dazu vorgesehen ist, während eines Bearbeitungszyklus zumindest einen Arbeitsbereich zumindest im Wesentlichen vollständig abzudecken, mit zumindest einer Erfassungseinheit, welche dazu vorgesehen ist, zumindest eine von dem Roboter zurückgelegte Strecke in dem Arbeitsbereich zu erfassen, mit zumindest einer Steuer- und/oder Regeleinheit, die zumindest zu einer Steuerung des Roboters innerhalb des Arbeitsbereichs eingerichtet ist, wobei die Steuer- und/oder Regeleinheit zumindest eine virtuelle Karte des Arbeitsbereichs aufweist und/oder dazu eingerichtet ist, eine virtuelle Karte des Arbeitsbereichs zu erzeugen, wobei die Steuer- und/oder Regeleinheit dazu eingerichtet ist, die erfasste zurückgelegte Strecke des Roboters in die virtuelle Karte zu übertragen, und mit zumindest einer Benutzerinteraktionseinheit.

US 2018/074508 A1 zeigt ein Robotersystem nach dem Oberbegriff des Anspruchs 1.

### Offenbarung der Erfindung

Die Erfindung geht aus von einem Robotersystem, insbesondere einem teilautonomen Robotersystem, mit zumindest einem angetrieben bewegbaren, insbesondere fahrbaren, Roboter, der dazu vorgesehen ist, während eines Bearbeitungszyklus zumindest einen Arbeitsbereich zumindest im Wesentlichen vollständig abzudecken, mit zumindest einer Erfassungseinheit, welche dazu vorgesehen ist, zumindest eine von dem Roboter, insbesondere während des Bearbeitungszyklus, zurückgelegte Strecke in dem Arbeitsbereich zu erfassen, mit zumindest einer Steuer- und/oder Regeleinheit, die zumindest zu einer Steuerung des Roboters innerhalb des Arbeitsbereichs eingerichtet ist, wobei die Steuer- und/oder Regeleinheit zumindest eine virtuelle Karte des Arbeitsbereichs aufweist und/oder dazu eingerichtet ist, eine virtuelle Karte des Arbeitsbereichs zu erzeugen, wobei die Steuer- und/oder Regeleinheit dazu eingerichtet ist, die erfasste zurückgelegte Strecke des Roboters in die virtuelle Karte zu übertragen, und mit zumindest einer Benutzerinteraktionseinheit.

Es wird vorgeschlagen, dass die Benutzerinteraktionseinheit dazu eingerichtet ist, insbesondere nach einem Bearbeitungszyklus des Roboters, zumindest eine Bewertung von zumindest einem Teilabschnitt der von dem Roboter zurückgelegten Strecke, insbesondere innerhalb der virtuellen Karte, durch einen Benutzer zu ermöglichen und an die Steuer- und/oder Regeleinheit zu übermitteln.

Durch die erfindungsgemäße Ausgestaltung des Robotersystems kann eine vorteilhaft benutzerspezifische Anpassung des Robotersystems ermöglicht werden. Es kann vorteilhaft ein Feedback auf Lösungsansätze eines Navigationsalgorithmus ermöglicht werden. Dadurch können vorteilhaft zukünftige Lösungsansätze für den Arbeitsbereich benutzerspezifisch angepasst werden. Es kann eine vorteilhaft umfangreiche und komplexe Interaktion mit dem Robotersystem ermöglicht werden. Es kann vorteilhaft einfach und direkt eine Anpassung des Navigationsalgorithmus zur Steuerung des Roboters und zu einer Abdeckung des Arbeitsbereichs erreicht werden. Insbesondere kann eine Interaktion mit dem Robotersystem ermöglicht werden, welche vorteilhaft über eine Anpassung des Arbeitsbereichs und/oder der virtuellen Karte hinausgeht.

Unter "eingerichtet" soll insbesondere speziell programmiert, speziell ausgelegt und/oder speziell ausgestattet verstanden werden. Darunter, dass ein Objekt zu einer bestimmten Funktion eingerichtet ist, soll insbesondere verstanden werden, dass das Objekt diese bestimmte Funktion in zumindest einem Anwendungs- und/oder Betriebszustand erfüllt und/oder ausführt. Unter einer "Benutzerinteraktionseinheit" soll insbesondere eine Einheit einer Vorrichtung oder eines Systems, insbesondere des Robotersystems, verstanden werden, über die eine Interaktion mit einem Benutzer der Vorrichtung oder des Systems erfolgt. Insbesondere ist die Benutzerinteraktionseinheit dazu eingerichtet, zumindest eine Benutzereingabe, insbesondere die Bewertung, zu erfassen und/oder zu verarbeiten. Bevorzugt ist die Benutzerinteraktionseinheit dazu eingerichtet, eine Eingabeaufforderung auszugeben. Vorzugsweise ist die Benutzerinteraktionseinheit dazu eingerichtet, eine Benutzereingabe, insbesondere die Bewertung, in zumindest ein elektrisches und/oder elektronisches Signal umzuwandeln, welches insbesondere zu einer Verarbeitung mittels der Steuer- und/oder Regeleinheit vorgesehen ist. Unter "vorgesehen" soll insbesondere speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Bewertung des Teilabschnitts" soll insbesondere eine Angabe des Benutzers zu der innerhalb des Teilabschnitts gewählten zurückgelegten Strecke des Roboters verstanden werden, wobei die Angabe insbesondere dazu vorgesehen ist, die innerhalb des Teilabschnitts zurückgelegte Strecke zu bewerten. Die Bewertung bezieht sich dabei insbesondere auf einen, insbesondere den vorher genannten, in der Vergangenheit von dem Roboter zurückgelegten Teilabschnitt. Mittels der Bewertung kann ein Benutzer insbesondere eine, vorzugsweise subjektive, Wertung, insbesondere hinsichtlich einer Qualität, eines Ergebnisses, eines Zeitbedarfs und/oder dergleichen, für einen zurückgelegten Teilabschnitt abgeben. Die Bewertung soll vorzugsweise keine Eingabe sein, wie eine zukünftige Fortbewegungsstrecke für den bewerteten Teilabschnitt ausgebildet sein soll, sondern soll der Steuer- und/oder Regeleinheit eine benutzerspezifische Einordnung des Teilabschnitts für eine zukünftige Steuerung des Roboters anhand zumindest eines quantifizierbaren Bewertungsparameters ermöglichen. Insbesondere gibt eine Ausgestaltung der Benutzerinteraktionseinheit eine Ausgestaltung und/oder eine Eingabeart der Bewertung vor. Vorzugsweise umfasst die Benutzerinteraktionseinheit zumindest ein Eingabemittel zur Eingabe einer Benutzereingabe, insbesondere der Bewertung. Bevorzugt ist die Benutzerinteraktionseinheit dazu eingerichtet, die Bewertung dem Teilabschnitt zuzuordnen. Insbesondere ist die Benutzerinteraktionseinheit dazu eingerichtet, die Bewertung des Teilabschnitts über eine Markierung des Teilabschnitts durch den Benutzer zu erfassen. Bevorzugt ist die Benutzerinteraktionseinheit dazu eingerichtet, insbesondere vor der Markierung des Teilabschnitts oder nach der Markierung des Teilabschnitts, dem Benutzer eine Auswahl von zumindest zwei Bewertungsparametern auszugeben, wobei insbesondere über eine Auswahl eines der Bewertungsparameter durch den Benutzer die Bewertung des markierten Teilabschnitts erfolgt. Es ist auch denkbar, dass die Benutzerinteraktionseinheit dazu eingerichtet ist, mehr als zwei verschiedene Bewertungsparameter auszugeben. Beispielsweise sind die zwei Bewertungsparameter als positive Bewertung, insbesondere "gut", und als negative Bewertung, insbesondere "schlecht", des Teilabschnitts ausgebildet. Alternativ oder zusätzlich ist denkbar, dass die Benutzerinteraktionseinheit dazu eingerichtet ist, weitere Bewertungsparameter zur Auswahl zu stellen, wobei beispielsweise ein weiterer Bewertungsparameter eine erneute Bearbeitung des markierten Teilabschnitts durch den Roboter verbietet, eine Bearbeitung des markierten Teilabschnitts in einem weiteren Bearbeitungszyklus fordert oder eine andere Eingangsstrecke für den Teilabschnitt fordert, wobei insbesondere die Fortbewegungsstrecke innerhalb des Teilabschnitts erhalten bleiben kann.

Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer, beispielsweise als Prozessor, als FPGA und/oder als Mikrocontroller ausgebildeten, Prozessoreinheit und mit einer, beispielsweise als physischer oder virtueller Speicher ausgebildeten, Speichereinheit sowie mit einem in der Speichereinheit gespeicherten Betriebsprogramm verstanden werden. Bevorzugt ist die Steuer- und/oder Regeleinheit dazu eingerichtet, insbesondere über die Benutzerinteraktionseinheit, eine Kommunikationseinheit des Robotersystems und/oder eine andere Schnittstelle des Robotersystems, die virtuelle Karte, vorzugsweise durch den Benutzer, übermittelt zu bekommen und zu hinterlegen. Alternativ oder zusätzlich ist denkbar, dass die Steuer- und/oder Regeleinheit dazu eingerichtet ist, mittels über die Erfassungseinheit erfasster Daten des Arbeitsbereichs die virtuelle Karte zu erstellen und zu hinterlegen. Insbesondere ist/wird die zumindest eine virtuelle Karte in der Steuer- und/oder Regeleinheit hinterlegt. Bevorzugt ist die Benutzerinteraktionseinheit dazu eingerichtet, dem Benutzer in zumindest einem Betriebszustand die virtuelle Karte auszugeben, insbesondere anzuzeigen. Bevorzugt wird die virtuelle Karte, insbesondere auf eine, einem Fachmann bekannte und sinnvoll erscheinende Art, mittels eines SLAM-Verfahrens (Simultaneous Localization and Mapping) erzeugt, vorzugsweise mittels des Roboters und/oder der Erfassungseinheit.

Unter einem "Bearbeitungszyklus" soll insbesondere ein Zeitraum verstanden werden, innerhalb dessen der Roboter den Arbeitsbereich genau einmal zumindest im Wesentlichen vollständig abdeckt. Bevorzugt ist der Roboter dazu vorgesehen, insbesondere bei einer Aktivierung und/oder in einem vorgegebenen Zeitintervall, jeweils eine vorgegebene Anzahl von Bearbeitungszyklen, insbesondere genau einen Bearbeitungszyklus, auszuführen. Vorzugsweise ist der Arbeitsbereich, insbesondere über die virtuelle Karte oder eine andere Begrenzung, vorgegeben und in der Steuer- und/oder Regeleinheit hinterlegt. Beispielsweise ist der Arbeitsbereich als Rasenfläche innerhalb eines Gartens o.dgl., als eine Bodenfläche einer Wohnung o.dgl. oder als ein zu überwachender Bereich ausgebildet. Der vorgegebene Arbeitsbereich und/oder die virtuelle Karte sind bevorzugt zweidimensional ausgebildet und insbesondere über eine ebene Fläche ausgebildet. Es ist aber auch denkbar, dass der vorgegebene Arbeitsbereich und/oder die virtuelle Karte dreidimensional ausgebildet sind/ist. Bevorzugt ist die von dem Roboter zurückgelegte Strecke, die insbesondere den Teilabschnitt umfasst, als Strecke ausgebildet, die der Roboter innerhalb eines Bearbeitungszyklus überfährt/überfliegt. Alternativ oder zusätzlich ist denkbar, beispielsweise bei einem großflächigen Arbeitsbereich, dass der Roboter einen Bearbeitungszyklus mit einer Unterbrechung ausführt und/oder den Arbeitsbereich über zwei zeitlich voneinander beabstandete Zeiträume abdeckt, insbesondere bearbeitet.

Der angetrieben bewegbare Roboter ist vorzugsweise fahrbar, schwimmfähig und/oder flugfähig ausgebildet. Bevorzugt ist der Roboter teilautonom oder vollautonom ausgebildet. Insbesondere umfasst der Roboter zumindest eine Antriebseinheit und zumindest ein Fortbewegungsmittel, wie beispielsweise ein Rad oder einen Rotor, welches insbesondere über die Antriebseinheit antreibbar ausgebildet ist. Beispielsweise ist die Antriebseinheit zumindest teilweise als ein Elektromotor ausgebildet. Vorzugsweise umfasst der Roboter die Erfassungseinheit und/oder die Steuer- und/oder Regeleinheit zumindest teilweise. Es ist auch denkbar, dass der Roboter die Benutzerinteraktionseinheit zumindest teilweise umfasst. Alternativ ist denkbar, dass der Roboter getrennt von der Erfassungseinheit, der Steuer- und/oder Regeleinheit und/oder der Benutzerinteraktionseinheit ausgebildet/angeordnet ist, wobei insbesondere Steuerbefehle über die Kommunikationseinheit an den Roboter, insbesondere die Antriebseinheit, übermittelt werden. Vorzugsweise ist die Kommunikationseinheit zu einer drahtlosen Übermittlung von elektronischen Daten vorgesehen, beispielsweise über eine Funkverbindung, eine optische Schnittstelle o.dgl. Vorzugsweise ist die Kommunikationseinheit dazu vorgesehen, den Roboter mit roboterexternen Einheiten des Robotersystems zu verbinden. In einer beispielhaften Ausgestaltung des Robotersystems ist zumindest ein Ausgabemittel der Benutzerinteraktionseinheit roboterextern ausgebildet/angeordnet und die Steuer- und/oder Regeleinheit als Teil des Roboters ausgebildet, wobei insbesondere die Kommunikationseinheit dazu vorgesehen ist, die virtuelle Karte, insbesondere zusammen mit der übertragenen zurückgelegten Strecke des Roboters, vorzugsweise in Form eines elektronischen Signals an das Ausgabemittel zu übertragen. Vorzugsweise ist zumindest ein Eingabemittel der Benutzerinteraktionseinheit roboterextern ausgebildet/angeordnet, wobei insbesondere die Kommunikationseinheit dazu vorgesehen ist, die Bewertung des Teilabschnitts, insbesondere zusammen mit dem zugeordneten Teilabschnitt, vorzugsweise in Form eines elektronischen Signals, an die Steuer- und/oder Regeleinheit zu übertragen.

Beispielsweise ist der Roboter als ein Staubsaugroboter, als ein Rasenmähroboter, als ein Überwachungsroboter, insbesondere als Überwachungsdrohne, als ein Rasenvertikutierroboter, als ein Bodenkehrroboter, als ein Schneeräumroboter, als ein Putzroboter, als eine Arbeitsdrohne, als ein Poolreinigungsroboter oder als ein anderer, einem Fachmann als sinnvoll erscheinender Roboter ausgebildet. Vorzugsweise ist der Roboter dazu vorgesehen, den Arbeitsbereich bei einer Abdeckung des Arbeitsbereichs zu bearbeiten. Insbesondere ist der Roboter dazu vorgesehen, während einer Abdeckung des Arbeitsbereichs einen Untergrund zu bearbeiten. Es ist denkbar, dass das Robotersystem als Teil eines Smart-Home-Systems ausgebildet ist und/oder mehr als einen Roboter umfasst, wobei insbesondere die Steuer- und/oder Regeleinheit zumindest teilweise roboterextern ausgebildet/angeordnet ist. Es ist auch denkbar, dass die Erfassungseinheit zumindest teilweise roboterextern ausgebildet/angeordnet ist. Vorzugsweise ist die Erfassungseinheit dazu vorgesehen, eine Position des Roboters innerhalb des Arbeitsbereichs zu erfassen. Es ist denkbar, dass die Erfassungseinheit dazu vorgesehen ist, insbesondere über den Arbeitsbereich begrenzende Objekte, den Arbeitsbereich zu erfassen. Die Erfassungseinheit umfasst bevorzugt zumindest ein Sensorelement, vorzugsweise eine Mehrzahl an Sensorelementen. Insbesondere ist zumindest ein Sensorelement der Erfassungseinheit an dem Roboter angeordnet. Die Erfassungseinheit umfasst beispielsweise ein Lidar-System, ein Kamerasystem mit einer Bildauswertung, einen Positionserfassungssensor, wie beispielsweise einen GPS-Sensor, einen Galileo-Sensor o.dgl., oder andere, einem Fachmann für teilautonome Roboter bekannte Sensoren.

Vorzugsweise ist die Steuer- und/oder Regeleinheit dazu eingerichtet, eine Strecke des Roboters zur zumindest im Wesentlichen vollständigen Abdeckung des Arbeitsbereichs zu ermitteln, wobei der Roboter insbesondere dazu vorgesehen ist, die ermittelte Strecke in einem zukünftigen Bearbeitungszyklus abzufahren. Bevorzugt umfasst die Steuer- und/oder Regeleinheit zumindest einen Algorithmus zur Ermittlung der Strecke des Roboters zur zumindest im Wesentlichen vollständigen Abdeckung des Arbeitsbereichs. Bevorzugt ist die Steuer- und/oder Regeleinheit, insbesondere der Algorithmus, dazu eingerichtet, den Arbeitsbereich in mehrere Teilbereiche einzuteilen, die während eines Bearbeitungszyklus nacheinander von dem Roboter abgefahren werden. Insbesondere ist der Algorithmus zur Lösung des Problem des Handlungsreisenden, insbesondere des generalisierten Problems des Handlungsreisenden, (Traveling Salesman Problem bzw. Generalized Traveling Salesman Problem) vorgesehen, um eine Reihenfolge der Teilbereiche bei der Ermittlung der Strecke des Roboters zur zumindest im Wesentlichen vollständigen Abdeckung des Arbeitsbereichs zu ermitteln. Bevorzugt ist die Steuer- und/oder Regeleinheit, insbesondere der Algorithmus, dazu eingerichtet, für die einzelnen Teilbereiche jeweils eine Strecke zur Abdeckung durch den Roboter zu ermitteln, vorzugsweise mittels der Morsetheorie. Beispielsweise ist die Steuer- und/oder Regeleinheit, insbesondere der Algorithmus, dazu eingerichtet, den Arbeitsbereich in die Teilbereiche zu unterteilen, welche insbesondere jeweils eine polygonförmige, vorzugsweise rechteckige oder dreieckige, Grundform aufweisen. Beispielsweise ist die Steuer- und/oder Regeleinheit, insbesondere der Algorithmus, dazu eingerichtet, die Teilbereiche jeweils in geradlinigen, zueinander zumindest im Wesentlichen parallel angeordneten Bahnen abzufahren, insbesondere in Abhängigkeit von einem Übergangspunkt von einem anderen Teilbereich in den jeweiligen Teilbereich, von einem Übergangspunkt von dem jeweiligen Teilbereich in einen weiteren Teilbereich und/oder von einer Grundform eines jeweiligen Teilbereichs. Vorzugsweise umfasst einer der Teilbereiche des Arbeitsbereichs den zu bewertenden bzw. bewerteten Teilabschnitt. Unter "im Wesentlichen parallel" soll insbesondere eine Ausrichtung einer Geraden, einer Ebene oder einer Richtung relativ zu einer anderen Geraden, einer anderen Ebene oder einer Bezugsrichtung verstanden werden, wobei die Gerade, die Ebene oder die Richtung gegenüber der anderen Gerade, der anderen Ebene oder der Bezugsrichtung, insbesondere in einer Projektionsebene betrachtet, eine Abweichung von insbesondere kleiner als 8°, vorteilhaft kleiner als 5° und besonders vorteilhaft kleiner als 2°, aufweist.

Des Weiteren wird vorgeschlagen, dass die Steuer- und/oder Regeleinheit dazu eingerichtet ist, die über die Benutzerinteraktionseinheit übermittelte Bewertung des zumindest einen Teilabschnitts zu einer, insbesondere zukünftigen, Steuerung des Roboters zumindest innerhalb des zumindest einen Teilabschnitts, insbesondere für einen weiteren Bearbeitungszyklus, zu berücksichtigen. Es kann eine vorteilhaft intuitive Anpassung der zurückgelegten Strecke des Roboters ermöglicht werden. Es kann eine vorteilhaft benutzerspezifische Anpassung der Steuerung des Roboters und/oder der Abdeckung des Arbeitsbereichs durch den Roboter ermöglicht werden. Insbesondere ist der Roboter dazu vorgesehen, den weiteren Bearbeitungszyklus zeitlich nach der Bewertung durch den Benutzer auszuführen. Bevorzugt ist die Steuer- und/oder Regeleinheit dazu eingerichtet, eine zukünftige Fortbewegungsstrecke des Roboters zur zumindest im Wesentlichen vollständigen Abdeckung des Arbeitsbereichs während eines Bearbeitungszyklus, insbesondere in dem weiteren Bearbeitungszyklus und/oder zumindest innerhalb des bewerteten Teilabschnitts, in Abhängigkeit von der Bewertung des zumindest einen Teilabschnitts zu ermitteln. Unter einer "Berücksichtigung der Bewertung" durch die Steuer- und/oder Regeleinheit soll insbesondere verstanden werden, dass sich zumindest ein Wegfindungsparameter des Algorithmus und/oder zumindest ein Teil der zukünftigen Fortbewegungsstrecke des Roboters durch die übermittelte Bewertung ändert. Insbesondere umfasst der Algorithmus eine Mehrzahl von Wegfindungsparametern, welche jeweils als eine Rahmenbedingung der Lösung des Problems des Handlungsreisenden oder einer Ermittlung einer einen Teilbereich abdeckenden Strecke des Roboters ausgebildet sind. Bevorzugt ist die Steuer- und/oder Regeleinheit dazu eingerichtet, nach jedem Bearbeitungszyklus, insbesondere falls eine Bewertung eines Teilbereichs übermittelt wurde, eine, insbesondere zukünftige, Steuerung des Roboters, insbesondere eine zukünftige Fortbewegungsstrecke des Roboters, zumindest innerhalb des zumindest einen bewerteten Teilabschnitts, für einen weiteren Bearbeitungszyklus zu ermitteln. Insbesondere ist die Steuer- und/oder Regeleinheit dazu eingerichtet, nach jedem Bearbeitungszyklus, insbesondere falls eine Bewertung eines Teilabschnitts übermittelt wurde, den Algorithmus auszuführen, wobei insbesondere eine zukünftige Fortbewegungsstrecke des Roboters zur zumindest im Wesentlichen vollständigen Abdeckung des Arbeitsbereichs während eines Bearbeitungszyklus ermittelt wird.

Zudem wird vorgeschlagen, dass die Benutzerinteraktionseinheit zumindest ein, insbesondere das vorher genannte, Eingabemittel zur Erfassung der Bewertung aufweist, welches dazu vorgesehen ist, die Bewertung über zumindest ein haptisches, optisches und/oder akustisches Signal zu erfassen, wobei die Steuer- und/oder Regeleinheit dazu eingerichtet ist, dem erfassten Signal zumindest eine Position im Arbeitsbereich und/oder einen Zeitpunkt im Bearbeitungszyklus zuzuordnen. Es kann eine vorteilhaft einfache und schnelle Eingabe und/oder Zuordnung der Bewertung ermöglicht werden. Es kann eine vorteilhaft direkte Eingabe der Bewertung erfolgen, insbesondere ohne dass auf eine Beendigung des aktuellen Bearbeitungszyklus gewartet werden muss. Es kann ein vorteilhaft hoher Bedienungskomfort erreicht werden, insbesondere zur Eingabe der Bewertung. Beispielsweise ist das Eingabemittel als eine, insbesondere computerausgeführte, Anwendung, als eine Tastatur, als ein Touch-Display, als ein Mikrofon, als eine Kamera mit einer Bildauswertung o.dgl. ausgebildet. Beispielsweise ist das zu erfassende Signal als ein Sprachbefehl, als eine Geste oder als eine Berührung des Benutzers ausgebildet. Insbesondere sind für das zu erfassende Signal zumindest zwei, insbesondere mehrere, Referenzwerte hinterlegt, wobei jedem Referenzwert genau ein Bewertungsparameter zugeordnet ist. Beispielsweise sind die Referenzwerte jeweils als ein vorgegebener Sprachbefehl, als eine vorgegebene Geste oder als eine Position und/oder als eine Art der Berührung durch den Benutzer ausgebildet. Vorzugsweise ist die Steuer- und/oder Regeleinheit dazu eingerichtet, einem zu einem Zeitpunkt erfassten Signal genau eine zu dem Zeitpunkt, insbesondere über die Erfassungseinheit, erfasste Position des Roboters im Arbeitsbereich zuzuordnen und insbesondere in die virtuelle Karte zu übertragen. Alternativ oder zusätzlich ist denkbar, dass die Steuer- und/oder Regeleinheit dazu eingerichtet ist, einen Zeitpunkt eines erfassten Signals genau einem Zeitpunkt im Bearbeitungszyklus zuzuordnen. Beispielsweise kann über eine zeitliche Zuordnung von Bewertungen eine Zuordnung einer Bewertung eines Teilabschnitts zu einem Bearbeitungszeitpunkt des bewerteten Teilabschnitts ermöglicht werden.

Ferner wird vorgeschlagen, dass die Benutzerinteraktionseinheit zumindest eine Anwendung zu einer Ausführung auf einem externen Gerät, wie beispielsweise einem Smartphone, umfasst, die dazu eingerichtet ist, die Bewertung durch den Benutzer über das externe Gerät zu ermöglichen. Es kann vorteilhaft eine Eingabe der Bewertung über bereits vorhandene Geräte eines Haushalts und/oder des Benutzers ermöglicht werden. Es kann eine vorteilhaft hohe Flexibilität hinsichtlich möglicher Anwendungsbereiche des Robotersystems erreicht werden. Es kann eine vorteilhaft einfache Integration des Robotersystems in ein Smart-Home-System oder ein Home-Entertainment-System ermöglicht werden. Vorzugsweise greift die Anwendung auf Eingabemittel, Ausgabemittel und/oder Recheneinheiten des externen Geräts zu, vorzugsweise zur Erfassung der Bewertung und/oder zur Erfassung des zu erfassenden Signals zur Erfassung der Bewertung. Insbesondere in einer Ausgestaltung des externen Geräts als Smartphone, ist die Anwendung dazu vorgesehen, dem Benutzer die virtuelle Karte über ein als Display ausgebildetes Ausgabemittel des externen Geräts anzuzeigen und/oder die Bewertung über eine mittels des als Touch-Display ausgebildeten Eingabemittels des externen Geräts erfasste Berührung zu erfassen. Vorzugsweise ist das externe Gerät, insbesondere die Anwendung, über die Kommunikationseinheit, insbesondere kommunikationstechnisch, mit der Steuer- und/oder Regeleinheit, der Erfassungseinheit und/oder dem Roboter verbunden. Insbesondere ist die Benutzerinteraktionseinheit dazu eingerichtet, die erfasste Bewertung von der Anwendung, insbesondere über die Kommunikationseinheit und/oder eine Kommunikationsschnittstelle des externen Geräts, an die Steuer- und/oder Regeleinheit zu übertragen. Vorzugsweise ist das externe Gerät getrennt von dem Roboter und/oder der Steuer- und/oder Regeleinheit angeordnet/ausgebildet.

Außerdem geht die Erfindung aus von einem Verfahren zur Steuerung, insbesondere Navigation, eines, insbesondere des vorher genannten, angetrieben bewegbaren, insbesondere fahrbaren, Roboters eines Robotersystems, insbesondere eines erfindungsgemäßen Robotersystems, wobei in zumindest einem Verfahrensschritt der Roboter mittels zumindest einer, insbesondere der vorher genannten, Steuer- und/oder Regeleinheit des Robotersystems derart gesteuert wird, dass der Roboter während eines Bearbeitungszyklus zumindest einen, insbesondere den vorher genannten, Arbeitsbereich zumindest im Wesentlichen vollständig abdeckt, wobei in zumindest einem Verfahrensschritt eine virtuelle Karte des Arbeitsbereichs in der Steuer- und/oder Regeleinheit hinterlegt wird und/oder von der Steuer- und/oder Regeleinheit erstellt wird, wobei in zumindest einem Verfahrensschritt mittels einer, insbesondere der vorher genannten, Erfassungseinheit des Robotersystems zumindest eine von dem Roboter zurückgelegte Strecke in dem Arbeitsbereich erfasst wird, wobei in zumindest einem Verfahrensschritt die erfasste zurückgelegte Strecke des Roboters in die virtuelle Karte übertragen wird.

Es wird vorgeschlagen, dass in zumindest einem Verfahrensschritt, insbesondere nach einem Bearbeitungszyklus des Roboters, mittels zumindest einer, insbesondere der vorher genannten, Benutzerinteraktionseinheit des Robotersystems zumindest eine Bewertung von zumindest einem Teilabschnitt der von dem Roboter zurückgelegten Strecke innerhalb der virtuellen Karte durch einen Benutzer erfolgt, wobei die zumindest eine Bewertung an die Steuer- und/oder Regeleinheit übermittelt wird.

Durch die erfindungsgemäße Ausgestaltung des Verfahrens kann eine vorteilhaft benutzerspezifische Anpassung des Robotersystems ermöglicht werden. Es kann vorteilhaft ein Feedback auf Lösungsansätze eines Navigationsalgorithmus ermöglicht werden. Dadurch können vorteilhaft zukünftige Lösungsansätze für den Arbeitsbereich benutzerspezifisch angepasst werden. Es kann eine vorteilhaft umfangreiche und komplexe Interaktion mit dem Robotersystem ermöglicht werden. Es kann vorteilhaft einfach und direkt eine Anpassung des Navigationsalgorithmus zur Steuerung des Roboters und zu einer Abdeckung des Arbeitsbereichs erreicht werden. Insbesondere kann eine Interaktion mit dem Robotersystem ermöglicht werden, welche vorteilhaft über eine Anpassung des Arbeitsbereichs und/oder der virtuellen Karte hinausgeht.

Vorzugsweise ist das Robotersystem zu einer Durchführung des Verfahrens zur Steuerung des angetrieben bewegbaren Roboters vorgesehen. Es ist denkbar, dass die virtuelle Karte, insbesondere eine vorgegebene, in der Steuer- und/oder Regeleinheit hinterlegte virtuelle Karte, mittels der Steuer- und/oder Regeleinheit, insbesondere periodisch oder kontinuierlich, über durch die Erfassungseinheit erfasste Daten des Arbeitsbereichs und/oder den Arbeitsbereich umgebender Objekte angepasst wird. Bevorzugt wird die erfasste Bewertung mittels der Benutzerinteraktionseinheit und/oder der Kommunikationseinheit, insbesondere zeitlich, direkt und automatisch nach einer Erfassung der Bewertung an die Steuer- und/oder Regeleinheit übermittelt. Es ist denkbar, dass nach einem Bearbeitungszyklus mittels der Benutzerinteraktionseinheit eine Eingabeaufforderung zu einer Bewertung der in dem, insbesondere vergangenen, Bearbeitungszyklus zurückgelegten Strecke durch den Benutzer erfolgt. Alternativ oder zusätzlich ist denkbar, dass eine Bewertung während eines Bearbeitungszyklus erfasst wird, wobei insbesondere eine restliche Fortbewegungsstrecke für den Bearbeitungszyklus mittels der Steuer- und/oder Regeleinheit in Abhängigkeit von der erfassten Bewertung angepasst wird.

Des Weiteren wird vorgeschlagen, dass in zumindest einem Verfahrensschritt, insbesondere für einen weiteren Bearbeitungszyklus, mittels der Steuer- und/oder Regeleinheit eine, insbesondere zukünftige, Fortbewegungsstrecke des Roboters zumindest innerhalb des zumindest einen, insbesondere bewerteten, Teilabschnitts in Abhängigkeit von der Bewertung ermittelt wird. Es kann eine vorteilhaft intuitive Anpassung der zurückgelegten Strecke des Roboters ermöglicht werden. Es kann eine vorteilhaft benutzerspezifische Anpassung der Steuerung des Roboters und/oder der Abdeckung des Arbeitsbereichs durch den Roboter ermöglicht werden.

Vorzugsweise werden als Eingangsgrößen zur Ermittlung der Teilbereiche zumindest Grenzen des Arbeitsbereichs, insbesondere in Form von Polygonen, mittels der Steuer- und/oder Regeleinheit, insbesondere des Algorithmus, eine Morse-Funktion der Morsetheorie und eine Bahnbreite des Roboters genutzt. Vorzugsweise entspricht die Bahnbreite einer maximalen Breite eines Bereichs, den der Roboter bei einer geradlinigen Bewegung, die insbesondere zumindest im Wesentlichen senkrecht zur Bahnbreite erfolgt, noch abdecken, insbesondere bearbeiten, kann. Unter "im Wesentlichen senkrecht" soll insbesondere eine Ausrichtung einer Geraden, einer Ebene oder einer Richtung relativ zu einer anderen Geraden, einer anderen Richtung oder einer Bezugsrichtung verstanden werden, wobei die Gerade, die Ebene oder die Richtung und die andere Gerade, die andere Ebene oder die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2°, aufweist. Mittels des Boustrophedon-Ansatzes wird vorzugsweise ein Muster von zumindest im Wesentlichen parallelen Bahnen erzeugt, das jeweils einen der Teilbereiche zumindest im Wesentlichen vollständig abdeckt. Insbesondere werden Hindernisse durch eine Aufteilung der Teilbereiche von den Teilbereichen umschlossen und sind vorzugsweise nicht Teil des Arbeitsbereichs. Alternativ, insbesondere in Abhängigkeit von einem verschieden von dem Boustrophedon-Ansatz ausgebildeten Ansatz, ist eine Erzeugung von anderen Mustern, beispielsweise von zufälligen Mustern, von Spiralbahnen, von verästelten Baummustern o. dgl., vorstellbar. Vorzugsweise ist jeder Teilbereich des Arbeitsbereichs durch zwei verschiedene Fortbewegungsarten des Roboters zumindest im Wesentlichen vollständig abdeckbar, insbesondere abfahrbar. Insbesondere ist eine erste Fortbewegungsart des Roboters als eine Fortbewegung entlang der zumindest im Wesentlichen parallelen Bahnen ausgebildet. Insbesondere ist eine zweite Fortbewegungsart des Roboters als eine Fortbewegung entlang von den Arbeitsbereich, insbesondere die Teilbereiche, begrenzenden Hindernissen ausgebildet, wobei der Roboter innerhalb eines Teilbereichs vorzugsweise zwischen der ersten Fortbewegungsart und der zweiten Fortbewegungsart abwechselt. Vorzugsweise gibt es unter Berücksichtigung der zwei Fortbewegungsarten eine Vielzahl verschiedener Möglichkeiten, insbesondere Teilbewegungspfade, zu einer Abdeckung eines Teilbereichs. Eine beispielhafte Ausgestaltung der Teilbewegungspfade ist ein Abfahren des jeweiligen Teilbereichs in parallelen Bahnen wobei zwischen den Bahnen eine Kurve gefahren wird, wobei beispielsweise die Bahnen parallel oder senkrecht zu einer Kante des Randbereichs und/oder des Arbeitsbereichs angeordnet sind. Insbesondere weist jeder der Teilbewegungspfade einen Startpunkt, an dem der Roboter eine Abdeckung des Teilbereichs beginnt, und einen Austrittspunkt, an dem der Teilbewegungspfad endet, auf. Insbesondere wechselt der Roboter an dem Austrittspunkt des Teilbewegungspfads von dem Teilbereich in einen weiteren Teilbereich. Vorzugsweise erfolgt eine Auswahl der Teilbewegungspfade für jeden Teilbereich des Arbeitsbereichs mittels der Steuer- und/oder Regeleinheit über eine Lösung des Problem des Handlungsreisenden, insbesondere in Abhängigkeit von einer Anordnung der Teilbereiche innerhalb des Arbeitsbereichs.

Zudem wird vorgeschlagen, dass in zumindest einem Verfahrensschritt, insbesondere dem vorher genannten Verfahrensschritt, die Bewertung des zumindest einen Teilabschnitts der von dem Roboter zurückgelegten Strecke mittels einer Auswahl und/oder einer Markierung des Teilabschnitts auf einer über die Benutzerinteraktionseinheit ausgegebenen Abbildung der virtuellen Karte erfolgt. Es kann eine vorteilhaft intuitive und schnelle Eingabe der Bewertung ermöglicht werden. Es kann eine vorteilhaft einfache Eingabe der Bewertung hinsichtlich benötigter Eingabemittel erreicht werden, da insbesondere auf eine Tastatur o. dgl. zur Eingabe der Bewertung verzichtet werden kann. Insbesondere erfolgt eine Ausgabe der virtuellen Karte als Abbildung nach einem, insbesondere abgeschlossenen, Bearbeitungszyklus. Bevorzugt erfolgt die Auswahl und/oder die Markierung des Teilabschnitts auf der virtuellen Karte nach einem, insbesondere abgeschlossenen, Bearbeitungszyklus. Vorzugsweise werden mittels der Steuer- und/oder Regeleinheit für jeden ausgewählten, markierten und/oder bewerteten Teilabschnitt jeweils Teilbereiche ermittelt, die den jeweiligen Teilabschnitt umfassen. Alternativ oder zusätzlich ist denkbar, dass die virtuelle Karte mittels der Benutzerinteraktionseinheit während eines Bearbeitungszyklus, insbesondere zumindest im Wesentlichen dauerhaft, ausgegeben werden kann. Insbesondere ist denkbar, dass eine Fortbewegung des Roboters innerhalb des Arbeitsbereichs während eines Bearbeitungszyklus über die Benutzerinteraktionseinheit zumindest im Wesentlichen instantan über die virtuelle Karte angezeigt wird.

Ferner wird vorgeschlagen, dass in zumindest einem Verfahrensschritt nach einer Auswahl und/oder einer Markierung des zumindest einen Teilabschnitts dem Benutzer mittels der Benutzerinteraktionseinheit mehr als zwei verschiedene Bewertungsparameter zur Auswahl gegeben werden, wobei jeder der Bewertungsparameter jeweils zu einer Ermittlung der, insbesondere zukünftigen, Fortbewegungsstrecke des Roboters über die Steuer- und/oder Regeleinheit unterschiedlich berücksichtigt wird. Es kann eine vorteilhaft benutzerspezifische Anpassung der Bewertung erreicht werden. Es kann eine vorteilhaft schnelle Anpassung der zurückgelegten Strecke innerhalb des Arbeitsbereichs an einen spezifischen Benutzerwunsch erreicht werden. Es kann eine vorteilhaft umfangreiche Bewertung der zurückgelegten Strecke ermöglicht werden. Dadurch kann nach einzelnen Bearbeitungszyklen eine vorteilhaft gezielte Anpassung einer zukünftigen Fortbewegungsstrecke ermöglicht werden. Beispielsweise sind die zumindest zwei, insbesondere zuvor beschriebenen, Bewertungsparameter als eine "gut"- und eine "nicht gut"-Aussage ausgebildet, wobei der Teilabschnitt entweder positiv oder negativ bewertet wird, insbesondere ohne eine Begründung zu der Art der Bewertung. Es sind auch weitere Ausgestaltungen der Bewertung denkbar, wobei insbesondere dem Benutzer bei einem Markieren des Teilabschnitts mehrere Möglichkeiten/Begründungen zu der Bewertung vorgeschlagen werden. Beispielsweise ist denkbar, dass Bewertungsparameter dazu vorgesehen sind, eine "falsche Bearbeitungszeit", eine "falsche Richtung", eine "zu langsame Bearbeitung" oder "zu schnelle Bearbeitung" des bewerteten Teilabschnitts zu übermitteln. Vorzugsweise wird je nach Art der Bewertung und/oder des Bewertungsparameters die Bewertung mittels der Steuer- und/oder Regeleinheit im Algorithmus anders gewichtet oder anders verarbeitet oder es wird in Abhängigkeit von der Bewertung/dem Bewertungsparameter ein anderer Wegfindungsparameter angepasst. Insbesondere soll unter "unterschiedlich berücksichtigt" verstanden werden, dass in Abhängigkeit von dem Bewertungsparameter nicht nur ein Wert eines Wegfindungsparameters zur Ermittlung der zukünftigen Fortbewegungsstrecke angepasst wird, sondern für verschiedene Bewertungsparameter auch voneinander verschiedene Wegfindungsparameter angepasst werden.

Des Weiteren wird vorgeschlagen, dass in zumindest einem Verfahrensschritt eine Fortbewegungsstrecke des Roboters innerhalb des Arbeitsbereichs mittels der Steuer- und/oder Regeleinheit jeweils für eine Mehrzahl von verschiedenen den Arbeitsbereich ausbildenden Teilbereichen separat ermittelt wird, wobei in zumindest einem weiteren Verfahrensschritt nach einer Bewertung des Teilabschnitts durch den Benutzer ausschließlich eine, insbesondere zukünftige, Fortbewegungsstrecke des Roboters für einen Teilbereich angepasst wird, welcher den bewerteten Teilabschnitt umfasst. Es kann vorteilhaft eine bereichsweise Anpassung des Arbeitsbereichs ermöglicht werden, wobei insbesondere lediglich der bewertete Teilabschnitt angepasst werden kann. Es kann eine ungewollte Anpassung von zufriedenstellend abgedeckten Teilabschnitten des Arbeitsbereichs, welche jedoch von dem Benutzer nicht bewertet wurden, vorteilhaft verhindert werden. Zusätzlich ist denkbar, dass die, insbesondere zukünftige, Fortbewegungsstrecke in einem weiteren Verfahrensschritt auch in anderen, von dem bewerteten Teilabschnitt verschiedenen, Teilbereichen angepasst wird, insbesondere in Abhängigkeit von einem Startpunkt und/oder einem Endpunkt der Fortbewegungsstrecke im jeweiligen, insbesondere dem Teilabschnitt zugeordneten und/oder den Teilabschnitt umfassenden, Teilbereich. Vorzugsweise erfolgt eine Anpassung der, insbesondere zukünftigen, Fortbewegungsstrecke des Roboters für einen, insbesondere den bewerteten Teilabschnitt umfassenden, Teilbereich vor einer Lösung des Problems des Handlungsreisenden durch die Steuer- und/oder Regeleinheit, insbesondere den Algorithmus, zur Ermittlung der zukünftigen Fortbewegungsstrecke des Roboters für den Arbeitsbereich. Alternativ ist denkbar, dass eine Anpassung der, insbesondere zukünftigen, Fortbewegungsstrecke des Roboters für einen, insbesondere den bewerteten Teilabschnitt umfassenden, Teilbereich in Abhängigkeit von mehreren durch die Steuer- und/oder Regeleinheit, insbesondere den Algorithmus, ermittelten Lösungen des Problems des Handlungsreisenden zur Ermittlung der zukünftigen Fortbewegungsstrecke des Roboters für den Arbeitsbereich erfolgt, wobei insbesondere die Fortbewegungsstrecke des Roboters für den, insbesondere den bewerteten Teilabschnitt umfassenden, Teilbereich in Abhängigkeit von einer zukünftigen Fortbewegungsstrecke des Roboters in zumindest einem an den, insbesondere den bewerteten Teilabschnitt umfassenden, Teilbereich angrenzenden Teilbereich des Arbeitsbereichs ermittelt wird. Vorzugsweise werden die Fortbewegungsstrecken für die einzelnen Teilbereiche des Arbeitsbereichs separat ermittelt und mittels der Steuer- und/oder Regeleinheit, insbesondere des Algorithmus, zu der, insbesondere zukünftigen, Fortbewegungsstrecke des Roboters durch den Arbeitsbereich zusammengefügt, vorzugsweise durch eine Lösung des Problems des Handlungsreisenden.

Zudem wird vorgeschlagen, dass in zumindest einem Verfahrensschritt eine Fortbewegungsstrecke des Roboters innerhalb des Arbeitsbereichs mittels der Steuer- und/oder Regeleinheit jeweils für eine Mehrzahl von verschiedenen den Arbeitsbereich ausbildenden Teilbereichen separat ermittelt wird, wobei in zumindest einem weiteren Verfahrensschritt nach einer, insbesondere negativen, Bewertung eines Teilabschnitts durch den Benutzer eine Aufteilung des Arbeitsbereichs in Teilbereiche angepasst wird, wobei insbesondere der bewertete Teilabschnitt innerhalb eines angepassten Teilbereichs angeordnet ist. Es kann eine vorteilhaft gezielte Anpassung der Aufteilung des Arbeitsbereichs in Teilbereiche ermöglicht werden, insbesondere zu einer Ausbildung eines Teilbereichs um den Teilabschnitt. Es kann vorteilhaft eine Anpassung der zukünftigen Fortbewegungsstrecke auf den bewerteten Teilabschnitt beschränkt werden. Es kann eine ungewollte Anpassung eines positiv bewerteten Teilabschnitts vorteilhaft verhindert werden. Es ist denkbar, dass der bewertete Teilabschnitt, insbesondere in Abhängigkeit von der Art der Bewertung, als ein eigener Teilbereich ausgebildet wird, aus einem Teilbereich und/oder dem Arbeitsbereich entfernt wird und/oder aus einem Teilbereich entfernt und zu einem weiteren Teilbereich hinzugefügt wird. Bevorzugt wird bei einer negativen Bewertung des Teilabschnitts mittels der Steuer- und/oder Regeleinheit zumindest eine Änderung an der zukünftigen Fortbewegungsstrecke des Roboters, insbesondere für einen weiteren Bearbeitungszyklus, relativ zu der von dem Roboter zurückgelegten Strecke, insbesondere eines vergangenen Bearbeitungszyklus, vorgenommen. Vorzugsweise wird bei einer positiven Bewertung des Teilabschnitts mittels der Steuer- und/oder Regeleinheit die zukünftige Fortbewegungsstrecke des Roboters, insbesondere für einen weiteren Bearbeitungszyklus, relativ zu der von dem Roboter zurückgelegten Strecke, insbesondere eines vergangenen Bearbeitungszyklus, innerhalb des bewerteten Teilabschnitts nicht geändert. Beispielsweise ist denkbar, dass ein in einem Bearbeitungszyklus nicht abgedeckter Bereich des Arbeitsbereichs aufgrund der Bewertung in einem weiteren Bearbeitungszyklus von dem Roboter abgedeckt wird, dass eine Bearbeitung eines Teilabschnitts durch eine Anpassung der Teilbereiche und insbesondere einer Reihenfolge zur Abdeckung der Teilbereiche zu einer anderen Zeit erfolgt und/oder dass die Teilbereiche in einer anderen Reihenfolge bearbeitet werden, was insbesondere jeweils durch eine Anpassung der Aufteilung des Arbeitsbereichs in andere Teilbereiche erreicht werden kann. Es ist denkbar, dass ein Teilbereich in mehrere kleinere Teilbereiche unterteilt wird, wobei insbesondere einer der kleineren Teilbereiche den bewerteten Teilabschnitt umfasst, oder dass zwei Teilbereiche, wobei ein Teilbereich der zwei Teilbereiche den bewerteten Teilabschnitt umfasst, zu einem grö-ßeren Teilbereich zusammengefügt werden.

Ferner wird vorgeschlagen, dass in zumindest einem Verfahrensschritt zumindest eine Bewertung von zumindest einem Teilabschnitt der von dem Roboter zurückgelegten Strecke in der Steuer- und/oder Regeleinheit hinterlegt wird, wobei eine Ermittlung einer, insbesondere zukünftigen, Fortbewegungsstrecke des Roboters innerhalb des Arbeitsbereichs über die Steuer- und/oder Regeleinheit in Abhängigkeit von einer Mehrzahl von in der Steuer- und/oder Regeleinheit hinterlegten Bewertungen erfolgt. Es kann eine vorteilhaft schrittweise Anpassung der den Arbeitsbereich abdeckenden Fortbewegungsstrecke ermöglicht werden. Es kann eine vorteilhaft hohe Benutzerzufriedenheit ermöglicht werden, insbesondere da eine Notwendigkeit zur Wiederholung von in der Vergangenheit bereits eingegebenen Bewertungen entfallen kann. Zusätzlich ist denkbar, dass Bewertungen von Teilabschnitten des Arbeitsbereichs und/oder daraus resultierende Änderungen in der virtuellen Karte an andere Robotersysteme in einer Umgebung des Robotersystems übermittelt werden oder von anderen Robotersystemen in einer Umgebung des Robotersystems übermittelt und in der Steuer- und/oder Regeleinheit hinterlegt werden. Beispielsweise ist denkbar, dass sich mehrere Robotersysteme und/oder externe Geräte in einer Umgebung, beispielsweise auf einer Baustelle, in einem Haushalt, in einem Garten o.dgl., die virtuelle Karte, insbesondere über die Kommunikationseinheit, teilen und/oder diese vorzugsweise untereinander aktualisieren.

Des Weiteren wird vorgeschlagen, dass eine Ermittlung einer, insbesondere zukünftigen, Fortbewegungsstrecke des Roboters innerhalb des Arbeitsbereichs mittels der Steuer- und/oder Regeleinheit in Abhängigkeit von der zumindest einen Bewertung über einen, insbesondere den vorher genannten, Algorithmus erfolgt, welcher regelmäßig nach jedem beendeten Bearbeitungszyklus des Roboters ausgeführt wird. Es kann eine vorteilhaft schrittweise Anpassung der den Arbeitsbereich abdeckenden Fortbewegungsstrecke ermöglicht werden. Vorzugsweise wird mittels des Algorithmus über die hinterlegte und/oder erstellte virtuelle Karte der Arbeitsbereich ermittelt. Bevorzugt wird mittels des Algorithmus der Arbeitsbereich, vorzugsweise in Abhängigkeit von der Bewertung und/oder von einer Position des bewerteten Teilabschnitts, in die Mehrzahl an Teilbereichen aufgeteilt. Vorzugsweise wird mittels des Algorithmus über eine Methode der Morsetheorie in Abhängigkeit von einer Anordnung der Teilbereiche zueinander und von der Bahnbreite des Roboters, und vorzugsweise in Abhängigkeit von der Bewertung und/oder von einer Position des bewerteten Teilabschnitts, für jeden Teilbereich eine zukünftige Fortbewegungsstrecke zur Abdeckung durch den Roboter ermittelt. Besonders bevorzugt wird mittels des Algorithmus aus den für die Teilbereiche ermittelten zukünftigen Fortbewegungsstrecken, vorzugsweise in Abhängigkeit von der Bewertung und/oder von einer Position des bewerteten Teilabschnitts, die zukünftige Fortbewegungsstrecke des Roboters zur zumindest im Wesentlichen vollständigen Abdeckung des Arbeitsbereich, insbesondere für einen nächsten Bearbeitungszyklus, ermittelt.

Zudem wird vorgeschlagen, dass eine Ermittlung einer, insbesondere zukünftigen, Fortbewegungsstrecke des Roboters innerhalb des Arbeitsbereichs mittels der Steuer- und/oder Regeleinheit in Abhängigkeit von einer Mehrzahl von hinterlegten Bewertungen über ein maschinelles Lernverfahren erfolgt. Es kann eine Erkennung von Mustern in den vom Benutzer eingegebenen Bewertungen ermöglicht werden. Dadurch kann hinsichtlich einer Anzahl an benötigten bewerteten Bearbeitungszyklen eine vorteilhaft schnelle Anpassung der den Arbeitsbereich abdeckenden Fortbewegungsstrecke erreicht werden, insbesondere da erkannte Muster zu einer Ermittlung der Fortbewegungsstrecke in anderen, insbesondere unbewerteten, Teilabschnitten herangezogen werden können. Vorzugsweise ist das maschinelle Lernverfahren dazu vorgesehen, in Abhängigkeit von einer Art der jeweiligen Bewertung, insbesondere des Bewertungsparameters, von einer Form und/oder einer Position des jeweiligen bewerteten Teilabschnitts und/oder von einer Fortbewegungsstrecke innerhalb des jeweiligen bewerteten Teilbereichs relativ zu weiteren, insbesondere anders bewerteten oder unbewerteten, Teilabschnitten oder Bereichen einer zurückgelegten Strecke des Roboters Muster in der Bewertung, vorzugsweise in einer Mehrzahl von erfassten und hinterlegten Bewertungen, zu erkennen. Vorzugsweise wird in zumindest einem Verfahrensschritt, insbesondere in zumindest einem Einlernschritt des maschinellen Lernverfahrens, zumindest ein Eingabeparameter von der Erfassungseinheit und/oder der Benutzerinteraktionseinheit an die Steuer- und/oder Regeleinheit übermittelt, bevorzugt zu einem Verarbeiten des zumindest einen Eingabeparameters. Beispielsweise ist der zumindest eine Eingabeparameter als eine Art der Bewertung, als eine Position des Teilabschnitts, als eine Fortbewegungsstrecke innerhalb des jeweiligen bewerteten Teilbereichs, als Fortbewegungsstrecken von weiteren, insbesondere positiv bewerteten, Teilabschnitten o.dgl. ausgebildet. Zusätzlich ist denkbar, dass, insbesondere über die Kommunikationseinheit, weitere Eingabeparameter, die insbesondere dem Arbeitsbereich und/oder dem Teilabschnitt zuordenbar sind, von externen Einheiten, wie beispielsweise anderen Robotern und/oder Robotersystemen in einer Umgebung des Arbeitsbereichs, abgefragt und an die Steuer- und/oder Regeleinheit übermittelt werden. Insbesondere erfolgt nach dem Einlernschritt zumindest ein Auswerteschritt des maschinellen Lernverfahrens, wobei in Abhängigkeit von den Eingabeparametern zusammen mit der virtuellen Karte Muster in der zumindest einen Bewertung gesucht werden. Vorzugsweise erfolgt in dem Auswerteschritt in Abhängigkeit von erkannten Mustern der zumindest einen Bewertung eine Ermittlung zumindest eines Pfaderkennungsparameters für den Algorithmus, insbesondere zur Ermittlung der, insbesondere zukünftigen, Fortbewegungsstrecke für den Teilabschnitt und/oder den Arbeitsbereich. Es ist denkbar, dass das maschinelle Lernverfahren in Kombination der Steuer- und/oder Regeleinheit mit einer externen Recheneinheit erfolgt, die insbesondere über die Kommunikationseinheit mit der Steuer- und/oder Regeleinheit verbunden und/oder verbindbar ist. Es ist denkbar, dass in zumindest einem Verfahrensschritt, insbesondere in zumindest einem Einlernschritt, ein faltendes neuronales Netzwerk für das maschinelle Lernverfahren verwendet wird. Unter einem "faltenden neuronalen Netzwerk" soll ein Convolutional Neural Network verstanden werden. In einer beispielhaften Ausgestaltung erfolgt eine Ermittlung der, insbesondere zukünftigen, Fortbewegungsstrecke des Roboters innerhalb des Arbeitsbereichs mittels der Steuer- und/oder Regeleinheit in Abhängigkeit von einer Mehrzahl von hinterlegten Bewertungen über das maschinelle Lernverfahren, wobei die Mehrzahl von Bewertungen jeweils zumindest einen Teilabschnitt bewerten, in dem der Roboter mehrere Kurven hintereinander abgefahren ist. Vorzugsweise wird mittels der Steuer- und/oder Regeleinheit über das maschinelle Lernverfahren aus den Bewertungen das Muster erkannt, wonach beispielsweise mehrere nacheinander abgefahrene Kurven durch den Benutzer unerwünscht sind. Vorzugsweise wird über das maschinelle Lernverfahren mittels der Steuer- und/oder Regeleinheit, insbesondere des Algorithmus, die, insbesondere zukünftige, Fortbewegungsstrecke des Roboters innerhalb des Arbeitsbereichs derart ermittelt, dass mehrere nacheinander abgefahrene Kurven möglichst vermieden werden. Insbesondere wird mittels der Steuer- und/oder Regeleinheit zur Vermeidung von mehreren nacheinander abgefahrenen Kurven innerhalb der, insbesondere zukünftigen, Fortbewegungsstrecke des Roboters innerhalb des Arbeitsbereichs zumindest ein Steuerungsparameter und/oder ein Wegfindungsparameter, insbesondere als Eingangsgrö-ße für den Algorithmus, angepasst. Vorzugsweise werden mittels der Steuer- und/oder Regeleinheit, insbesondere dem Algorithmus, bei dem maschinellen Lernverfahren Parameter einer Bewegung des Roboters innerhalb von bewerteten Teilabschnitten erkannt und einer Art der jeweiligen Bewertung, beispielsweise positiv oder negativ, zugeordnet. Weisen eine Vielzahl von identisch oder ähnlich bewerteten Teilabschnitten gleiche Parameter für eine Bewegung des Roboters, beispielsweise eine Drehung um mehr als 270° oder eine Kreuzung einer vom Roboter zurückgelegten Strecke mit mehr als drei zuvor zurückgelegten Strecken und/oder Bahnen o. dgl., innerhalb des jeweiligen bewerteten Teilabschnitts auf, wird mittels der Steuer- und/oder Regeleinheit für diese Parameter ein Muster für negative Bewertungen erkannt, wobei insbesondere diese Parametern für eine Ermittlung von einer, insbesondere zukünftigen, Fortbewegungsstrecke des Roboters für den jeweiligen bewerteten Teilabschnitte und/oder für den Arbeitsbereich vermieden werden oder mit einer reduzierten Gewichtung bei einer Ermittlung von einer, insbesondere zukünftigen, Fortbewegungsstrecke des Roboters für den jeweiligen bewerteten Teilabschnitte und/oder für den Arbeitsbereich berücksichtigt werden. Beispielsweise werden, insbesondere in einer einfachen Ausgestaltung, für eine Vielzahl von verschiedenen jeweils negativ bewerteten Teilabschnitten des Arbeitsbereichs, wobei insbesondere die Bewertungen und/oder die bewerteten Teilabschnitte in der Steuer- und/oder Regeleinheit hinterlegt wurden, mittels der Steuer- und/oder Regeleinheit ein gemeinsamer Parameter einer Bewegung des Roboters innerhalb der bewerteten Teilabschnitte erkannt, beispielsweise eine Drehung um mehr als 270° oder eine Kreuzung einer vom Roboter zurückgelegten Strecke mit mehr als drei zuvor zurückgelegten Strecken und/oder Bahnen. Bevorzugt wird in der beispielhaften Ausgestaltung bei einer, insbesondere darauffolgenden, Ermittlung einer, insbesondere zukünftigen, Fortbewegungsstrecke des Roboters für den jeweiligen bewerteten Teilabschnitte und/oder für den Arbeitsbereich dieser erkannte Parameter vermieden oder mit einer reduzierten Gewichtung berücksichtigt, wobei insbesondere lediglich bei Anordnungen des Roboters, die keine anderen oder lediglich niedriger gewichtete Parameter für eine zukünftige Fortbewegungsstrecke ermöglichen, beispielsweise wenn sich der Roboter in einer Sackgasse befindet, der erkannte Parameter zur Ermittlung der Fortbewegungsstrecke herangezogen wird. Alternativ oder zusätzlich ist ein derartiges Verfahren, wobei insbesondere eine Ermittlung einer, insbesondere zukünftigen, Fortbewegungsstrecke des Roboters innerhalb des Arbeitsbereichs mittels der Steuer- und/oder Regeleinheit in Abhängigkeit von einer Mehrzahl von hinterlegten Bewertungen über ein maschinelles Lernverfahren erfolgt, auch für positive Bewertungen denkbar, wobei beispielsweise erkannte Parameter, die über positiv bewerteten Teilabschnitte ermittelt wurden, für einer Ermittlung einer, insbesondere zukünftigen, Fortbewegungsstrecke des Roboters innerhalb des Arbeitsbereichs mit einer höheren Gewichtung berücksichtigt werden, wie beispielsweise relativ zu unbewerteten/unerkannten Parametern einer Bewegung des Roboters innerhalb einer zurückgelegten Strecke. Zusätzlich ist das maschinelle Lernverfahren auch für Bewertungen denkbar, welche komplexer als einfache positive und/oder einfache negative Bewertungen ausgebildet sind, beispielsweise für eine Bewertung, welche einen Zeitraum, in dem der bewertete Teilabschnitt bearbeitet wurde, betrifft, zusätzliche Bewertungsparameter umfasst o.dgl.

Ferner wird vorgeschlagen, dass in zumindest einem Verfahrensschritt nach einer Auswahl und/oder einer Markierung des zumindest einen Teilabschnitts dem Benutzer mittels der Benutzerinteraktionseinheit mehr als zwei verschiedene Bewertungsparameter zur Auswahl gegeben werden und/oder zumindest eine Eingabeaufforderung zu einer Eingabe zumindest eines Werts eines Bewertungsparameters ausgegeben wird, wobei zumindest ein, insbesondere der vorher genannte, Bewertungsparameter zumindest eine zeitliche Angabe umfasst, die mit einer Anordnung des Roboters in dem jeweiligen Teilabschnitt verknüpft ist. Es kann vorteilhaft eine Bewertung einer zeitlichen Reihenfolge der Teilbereiche des Arbeitsbereichs innerhalb eines Bearbeitungszyklus ermöglicht werden. Es kann eine Anpassung der Fortbewegungsstrecke an eine Benutzung von Teilbereichen durch den Benutzer erreicht werden, insbesondere um beispielsweise eine Kollision mit dem Benutzer oder eine Beeinträchtigung des Benutzers zu verhindern oder um vorteilhaft schnell eine in einem Teilbereich zu einer bestimmten Zeit auftretende Arbeit zu erledigen. Beispielsweise kann eine Reinigung eines Essbereichs durch den Roboter direkt nach einer Mahlzeit, welche zu einer bestimmten Zeit stattfindet, erreicht werden. Beispielsweise ist der Bewertungsparameter, welcher insbesondere die zumindest eine zeitliche Angabe umfasst, als ein gewünschter Zeitpunkt für eine Bearbeitung des Teilabschnitts durch den Roboter ausgebildet. Bevorzugt ist ein/der Wert des Bewertungsparameters als ein Zeitraum, als eine Uhrzeit, als eine Priorität des bewerteten Teilabschnitts innerhalb einer Reihenfolge von Teilbereichen des Arbeitsbereichs o. dgl. ausgebildet. In einer weiteren beispielhaften Ausgestaltung ist der Bewertungsparameter, welcher insbesondere die zumindest eine zeitliche Angabe umfasst, als eine negative oder positive Bewertung eines Bearbeitungszeitpunkts des bewerteten Teilabschnitts in dem, insbesondere vergangenen, Bearbeitungszyklus ausgebildet. In einer anderen beispielhaften Ausgestaltung ist der Bewertungsparameter, welcher insbesondere die zumindest eine zeitliche Angabe umfasst, als ein Zeitfenster ausgebildet, in welchem der Roboter den bewerteten Teilabschnitt vermeiden soll oder in welchem der Roboter den bewerteten Teilabschnitt bearbeiten soll. Vorzugsweise wird die Eingabeaufforderung ausgegeben, falls durch den Benutzer eine Auswahl einer zeitbezogenen Bewertung des ausgewählten oder markierten Teilabschnitts erfolgt. Vorzugsweise wird mittels der Steuer- und/oder Regeleinheit jeder erfassten Bewertung durch den Benutzer genau eine Uhrzeit und/oder genau ein Zeitpunkt innerhalb des Bearbeitungszyklus zugeordnet. Darunter, dass "die zeitliche Angabe mit einer Anordnung des Roboters in dem jeweiligen Teilabschnitt verknüpft ist", soll insbesondere verstanden werden, dass jeder zeitlichen Angabe eine Position des Roboters zugeordnet ist, an der der Roboter zu einem durch die zeitliche Angabe gegebenen Zeitpunkt angeordnet war. Es ist denkbar, dass mittels der Steuer- und/oder Regeleinheit jeder erfassten Bewertung durch den Benutzer genau eine Position innerhalb des Arbeitsbereichs zugeordnet wird, an der die Bewertung erfasst wurde.

Des Weiteren wird vorgeschlagen, dass in zumindest einem Verfahrensschritt mittels der Steuer- und/oder Regeleinheit in Abhängigkeit von der zumindest einen Bewertung die virtuelle Karte angepasst wird. Es kann eine vorteilhaft einfache und automatische Aktualisierung der virtuellen Karte ermöglicht werden. Es kann vorteilhaft eine Anpassung der Fortbewegungsstrecke innerhalb eines sich verändernden Arbeitsbereichs ermöglicht werden, insbesondere ohne eine Interaktion mit dem Benutzer. Vorzugsweise ist denkbar, dass ein Teilbereich der virtuellen Karte und/oder ein Teilabschnitt in einem Bereich der virtuellen Karte derart bewertet wird, dass mittels der Steuer- und/oder Regeleinheit die virtuelle Karte in Abhängigkeit von der Bewertung angepasst wird. Bevorzugt wird dem Benutzer bei der Bewertung des Teilbereichs der virtuellen Karte und/oder des Teilabschnitts in dem Bereich der virtuellen Karte, insbesondere nach einer Auswahl oder einer Markierung des Teilbereichs und/oder des Teilabschnitts, mittels der Benutzerinteraktionseinheit zumindest ein Bewertungsparameter zu Auswahl gegeben, welcher der virtuellen Karte an der ausgewählten/markierten Position zugeordnet ist. Zusätzlich ist denkbar, insbesondere falls die virtuelle Karte über mittels der Erfassungseinheit erfasste Daten angepasst wird, dass bei einer positiven Bewertung eines Teilbereichs der virtuellen Karte und/oder eines Teilabschnitts in einem Bereich der virtuellen Karte der bewertete Bereich in zukünftigen Verfahrensschritten unverändert belassen wird. Beispielsweise ist denkbar, dass über die Erfassungseinheit ein Objekt im Arbeitsbereich und/oder auf einer zurückzulegenden Strecke erfasst wird, welches insbesondere nicht in der virtuellen Karte umfasst ist, wobei mittels der Steuer- und/oder Regeleinheit bei einer negativen Bewertung eines Teilabschnitts um das Objekt, das Objekt in die virtuelle Karte übertragen bzw. eingezeichnet wird, vorzugsweise um das Objekt für zukünftige Bearbeitungszyklen bei einer Ermittlung einer, insbesondere zukünftigen Fortbewegungsstrecke des Roboters besser berücksichtigen zu können.

Das erfindungsgemäße Robotersystem und/oder das erfindungsgemäße Verfahren sollen/soll hierbei nicht auf die oben beschriebene Anwendung und Ausführungsform beschränkt sein. Insbesondere können/kann das erfindungsgemäße Robotersystem und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines erfindungsgemäßen Robotersystems zu einer Durchführung eines erfindungsgemäßen Verfahrens zur Steuerung eines angetrieben bewegbaren Roboters des Robotersystems,
- Fig. 2: eine schematische Darstellung eines Arbeitsbereichs, welcher mittels des Roboters zumindest im Wesentlichen vollständig abgedeckt, insbesondere bearbeitet, wird, mit einer Einteilung in Teilbereiche zur Steuerung des Roboters,
- Fig. 3: eine schematische Darstellung eines beispielhaften Ablaufs des erfindungsgemäßen Verfahrens zur Steuerung des angetrieben bewegbaren Roboters des erfindungsgemäßen Robotersystems,
- Fig. 4: eine Prinzipskizze eines Steuerungskonzepts zu einem Abfahren der Teilbereiche des Arbeitsbereichs durch den Roboter,
- Fig. 5: eine schematische Darstellung des Arbeitsbereichs mit einer von dem Roboter innerhalb eines Bearbeitungszyklus zurückgelegten Fortbewegungsstrecke und mit durch einen Benutzer bewerteten Teilabschnitten,
- Fig. 6: eine schematische Darstellung eines Algorithmus zu einer Ermittlung einer zukünftigen Fortbewegungsstrecke des Roboters zur Abdeckung des Arbeitsbereichs während eines Bearbeitungszyklus und
- Fig. 7: eine schematische Darstellung des Arbeitsbereichs mit einer in Abhängigkeit von den durch den Benutzer übermittelten Bewertungen angepassten Einteilung in Teilbereiche.

### Beschreibung des Ausführungsbeispiels

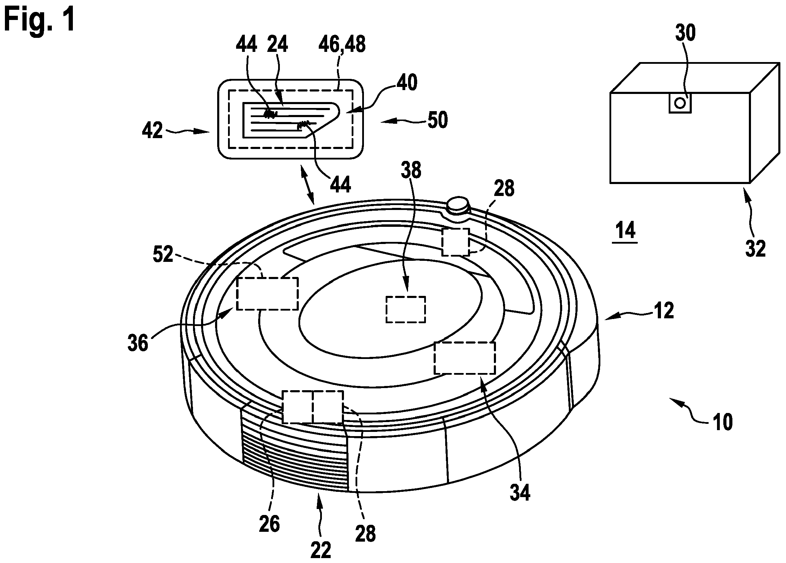

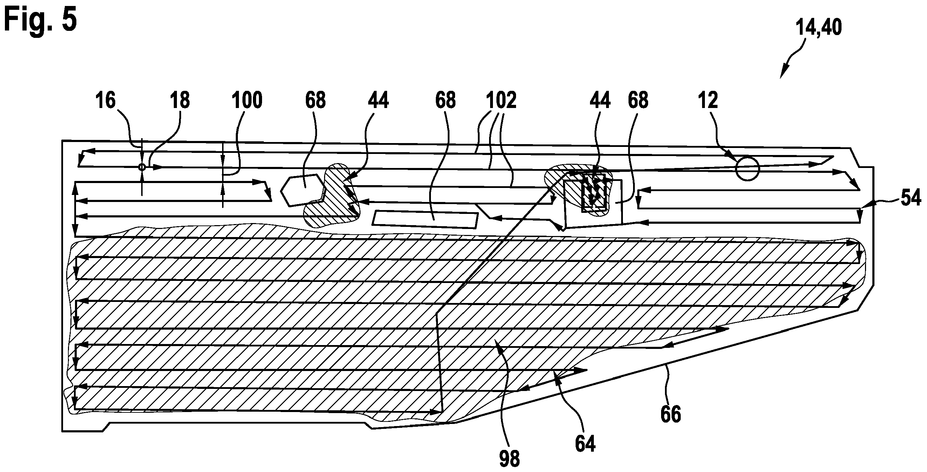

In Figur 1 ist ein Robotersystem 10 mit einem angetrieben bewegbaren Roboter 12 gezeigt. Das Robotersystem 10, insbesondere der Roboter 12, ist teilautonom ausgebildet. Es ist aber auch denkbar, dass das Robotersystem 10, insbesondere der Roboter 12, vollautonom oder heteronom, insbesondere ferngesteuert, ausgebildet ist. Der Roboter 12 ist auf einem Untergrund fahrbar ausgebildet. Es ist aber auch denkbar, dass der Roboter 12 schwimmfähig ausgebildet ist und dazu vorgesehen ist, sich auf einem Gewässer fortzubewegen, und/oder dass der Roboter 12 flugfähig ausgebildet ist und dazu vorgesehen ist, sich fliegend fortzubewegen. Der Roboter 12 ist als ein Saugroboter ausgebildet und insbesondere dazu vorgesehen, Staub, Dreck o.dgl. von einem Untergrund aufzunehmen und für eine spätere Entsorgung zu sammeln. Es sind aber auch andere Ausgestaltungen des Roboters 12 denkbar, beispielsweise als ein Rasenmähroboter, als ein Überwachungsroboter, insbesondere als Überwachungsdrohne, als ein Rasenvertikutierroboter, als ein Bodenkehrroboter, als ein Schneeräumroboter, als ein Putzroboter, als eine Arbeitsdrohne, als ein Poolreinigungsroboter oder als ein anderer, einem Fachmann als sinnvoll erscheinender Roboter zur Abdeckung eines Arbeitsbereichs 14. Der Roboter 12 ist dazu vorgesehen, während eines Bearbeitungszyklus den Arbeitsbereich 14 zumindest im Wesentlichen vollständig abzudecken, wobei insbesondere der Arbeitsbereich 14 einmal zumindest im Wesentlichen vollständig abgefahren und abgesaugt wird. Bevorzugt weist der Roboter 12 eine Bahnbreite 16 auf (siehe Figur 5), innerhalb deren der Roboter 12 zumindest im Wesentlichen senkrecht zu einer Fortbewegungsrichtung 18 des Roboters 12 einen Untergrund absaugt. Das Robotersystem 10 ist zu einer Durchführung eines Verfahrens 20 zur Steuerung, insbesondere Navigation, des angetrieben bewegbaren, insbesondere fahrbaren, Roboters 12 des Robotersystems 10 vorgesehen.

Das Robotersystem 10 umfasst eine Erfassungseinheit 22, welche dazu vorgesehen ist, eine von dem Roboter 12 zurückgelegte Strecke 24 in dem Arbeitsbereich 14 zu erfassen. Die Erfassungseinheit 22 ist als Teil des Roboters 12 ausgebildet. Die Erfassungseinheit 22 umfasst zumindest ein Sensorelement 26 zu einer Positionsbestimmung des Roboters 12 innerhalb des Arbeitsbereichs 14, wobei insbesondere die von dem Roboter 12 zurückgelegte Strecke 24 in dem Arbeitsbereich 14 über einen zeitlichen Verlauf der jeweils erfassten Position des Roboters 12 während des Bearbeitungszyklus bestimmt wird. Das Sensorelement 26 ist beispielsweise als ein Teil eines, insbesondere satellitengestützten und/oder innerhalb des Arbeitsbereichs 14 ausgebildeten, Positionsbestimmungssystems ausgebildet. Beispielsweise ist das Sensorelement 26 Teil eines Smart-Home-Systems, welches insbesondere den Arbeitsbereich 14 umfasst, als ein GPS-Sensor oder als ein Galileo-Sensor ausgebildet. Die Erfassungseinheit 22 umfasst mehrere weitere Sensorelemente 28 zu einer Erfassung einer den Roboter 12 umgebenden Umgebung. Alternativ oder zusätzlich ist denkbar, dass die Erfassungseinheit 22 dazu vorgesehen ist, die von dem Roboter 12 zurückgelegte Strecke 24 in dem Arbeitsbereich 14 mittels der erfassten den Roboter 12 umgebenden Umgebung zu ermitteln. Die weiteren Sensorelemente 28 sind beispielsweise als ein Lidar-System oder jeweils als eine Kamera ausgebildet, insbesondere in Kombination mit einer Bildauswertung. Es sind auch andere Ausgestaltungen der Erfassungseinheit 22, insbesondere der Sensorelemente 26, 28 der Erfassungseinheit 22, denkbar, welche insbesondere einem Fachmann bekannt sind und in Kombination mit dem Roboter 12 und/oder dem abzudeckenden Arbeitsbereich 14 als sinnvoll erscheinen. Alternativ oder zusätzlich ist denkbar, dass die Erfassungseinheit 22 zumindest teilweise roboterextern, insbesondere beabstandet von dem Roboter 12, ausgebildet/angeordnet ist. Beispielsweise umfasst die Erfassungseinheit 22 zumindest ein Sensorelement 30, welches an einem innerhalb des Arbeitsbereichs 14 oder an dem Arbeitsbereich 14 angeordneten Objekt 32 angeordnet ist, wobei insbesondere der Roboter 12 innerhalb des Arbeitsbereichs 14 über das Sensorelement 30 erfassbar ist.

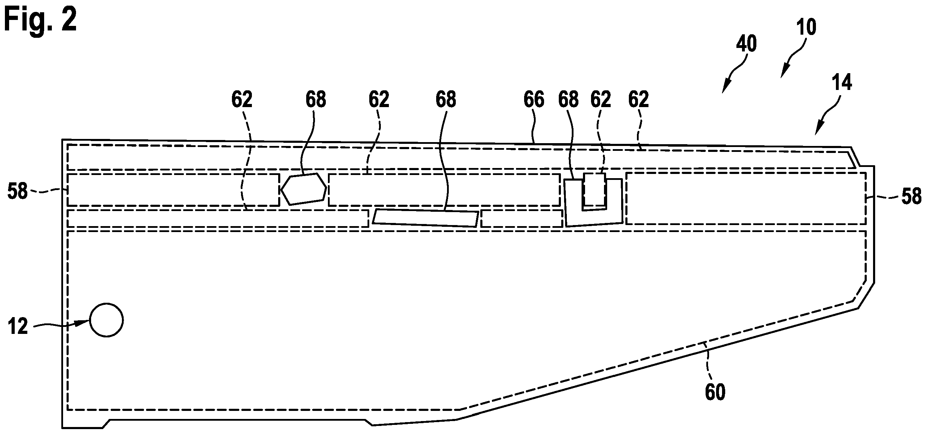

Das Robotersystem 10 umfasst eine Steuer- und/oder Regeleinheit 34, die zumindest zu einer Steuerung des Roboters 12 innerhalb des Arbeitsbereichs 14 eingerichtet ist. Die Steuer- und/oder Regeleinheit 34 ist als Teil des Roboters 12 ausgebildet. Es ist aber auch denkbar, dass die Steuer- und/oder Regeleinheit 34 zumindest teilweise oder vollständig roboterextern ausgebildet/angeordnet ist, wobei insbesondere Steuerbefehle der Steuer- und/oder Regeleinheit 34 über eine Kommunikationseinheit 36 des Robotersystems 10 an den Roboter 12, insbesondere eine Antriebseinheit 38 des Roboters 12, übermittelt werden. Die Steuer- und/oder Regeleinheit 34 weist eine virtuelle Karte 40 des Arbeitsbereichs 14 auf (siehe auch Figuren 2 und 5) und/oder ist dazu eingerichtet, eine virtuelle Karte 40 des Arbeitsbereichs 14 zu erzeugen. Die Steuer- und/oder Regeleinheit 34 ist dazu eingerichtet, die erfasste zurückgelegte Strecke 24 des Roboters 12 in die virtuelle Karte 40 zu übertragen.

Das Robotersystem 10 umfasst eine Benutzerinteraktionseinheit 42. Die Benutzerinteraktionseinheit 42 ist dazu eingerichtet, insbesondere nach einem Bearbeitungszyklus des Roboters 12, zumindest eine Bewertung von zumindest einem Teilabschnitt 44 (siehe Figur 5) der von dem Roboter 12 zurückgelegten Strecke 24 innerhalb der virtuellen Karte 40 durch einen Benutzer zu ermöglichen und an die Steuer- und/oder Regeleinheit 34 zu übermitteln. Die Benutzerinteraktionseinheit 42 umfasst ein Eingabemittel 46 zur Erfassung der Bewertung, welches dazu vorgesehen ist, die Bewertung über zumindest ein haptisches, optisches und/oder akustisches Signal zu erfassen, wobei die Steuer- und/oder Regeleinheit 34 dazu eingerichtet ist, dem erfassten Signal zumindest eine Position im Arbeitsbereich 14 und/oder einen Zeitpunkt im Bearbeitungszyklus zuzuordnen. Die Benutzerinteraktionseinheit 42 umfasst eine Anwendung 48 zu einer Ausführung auf einem externen Gerät 50, die dazu eingerichtet ist, die Bewertung durch den Benutzer über das externe Gerät 50 zu ermöglichen. Das externe Gerät 50 ist als ein Smartphone ausgebildet. Es sind aber auch andere Ausgestaltungen des externen Geräts 50 denkbar, beispielsweise als ein Computer, als eine Smartwatch, als eine Steuerkonsole eines Smart-Home-Systems o.dgl. Vorzugsweise ist die Anwendung 48 als das Eingabemittel 46 ausgebildet, wobei insbesondere an dem externen Gerät 50, beispielsweise an einem Touch-Display des externen Geräts 50, eingegebene Eingabebefehle des Benutzers als Signal/Signale für die Bewertung erfasst werden. Es ist auch denkbar, dass die Benutzerinteraktionseinheit 42 ein separates Eingabeelement umfasst, welches als Teil des Robotersystems 10 ausgebildet ist und vorzugsweise das Eingabemittel 46 ausbildet. Alternativ oder zusätzlich ist denkbar, dass die Benutzerinteraktionseinheit 42 zumindest teilweise als Teil des Roboters 12 ausgebildet ist, wobei insbesondere ein Eingabeelement und/oder das Eingabemittel 46 der Benutzerinteraktionseinheit 42 an dem Roboter 12 angeordnet sind/ist. Bevorzugt ist die Benutzerinteraktionseinheit 42, insbesondere die Anwendung 48, dazu eingerichtet, die virtuelle Karte 40 zusammen mit der zurückgelegten Strecke 24 des Roboters 12, insbesondere in einem vergangenen Bearbeitungszyklus, über das externe Gerät 50 auszugeben, vorzugsweise über eine optische Abbildung. Besonders bevorzugt ist die Benutzerinteraktionseinheit 42, insbesondere die Anwendung 48, dazu eingerichtet, die Bewertung über ein über das externe Gerät 50, insbesondere das Touch-Display, erkanntes haptisches Signal des Benutzers zu erfassen. Alternativ oder zusätzlich ist denkbar, dass die Benutzerinteraktionseinheit 42, insbesondere die Anwendung 48, dazu eingerichtet ist, einen Sprachbefehl oder eine Geste des Benutzers zu erkennen und vorzugsweise über den Sprachbefehl oder die Geste die Bewertung zu erfassen.

Das Robotersystem 10 umfasst die Kommunikationseinheit 36. Die Kommunikationseinheit 36 ist zu einer drahtlosen Übermittlung von elektronischen Daten vorgesehen, beispielsweise über eine Funkverbindung, eine optische Schnittstelle o.dgl. Vorzugsweise ist die Kommunikationseinheit 36 dazu vorgesehen, den Roboter 12 mit roboterexternen Einheiten des Robotersystems 10 zu verbinden. Die Kommunikationseinheit 36 ist dazu vorgesehen, die Bewertung des Teilabschnitts 44, insbesondere zusammen mit dem der Bewertung zugeordneten Teilabschnitt 44, vorzugsweise in Form eines elektronischen Signals von dem externen Gerät 50, insbesondere der Anwendung 48 der Benutzerinteraktionseinheit 42, an die Steuer- und/oder Regeleinheit 34 zu übertragen. Die Kommunikationseinheit 36 umfasst zumindest eine Kommunikationsschnittstelle 52, die als Teil des Roboters 12 ausgebildet ist. Beispielsweise ist die Kommunikationsschnittstelle 52 als eine Funkschnittstelle ausgebildet. Es sind aber auch andere Ausgestaltungen der Kommunikationseinheit 36, insbesondere der Kommunikationsschnittstelle 52, denkbar.

Der Roboter 12 umfasst die Antriebseinheit 38 und drei, insbesondere als Räder oder Rollen ausgebildete, Fortbewegungsmittel (in den Figuren nicht gezeigt), wobei zumindest eines der Fortbewegungsmittel über die Antriebseinheit 38 antreibbar ist. Insbesondere umfasst die Antriebseinheit 38 einen Elektromotor. Vorzugsweise ist das Fortbewegungsmittel oder zumindest ein weiteres der Fortbewegungsmittel zu einer Steuerung des Roboters 12 um eine zumindest im Wesentlichen senkrecht zu einem Untergrund des Roboters 12 ausgerichtete Achse drehbar. Vorzugsweise ist die Steuer- und/oder Regeleinheit 34 dazu eingerichtet, das Fortbewegungsmittel zur Steuerung des Roboters 12 anzusteuern, beispielsweise über einen Aktuator der Antriebseinheit 38 und/oder über den Elektromotor. Es sind aber auch andere Ausgestaltungen der Antriebseinheit 38 und/oder der Fortbewegungsmittel denkbar, beispielsweise mit einer von drei verschiedenen Anzahl an Fortbewegungsmitteln, mit einer anderen Ausgestaltung der Fortbewegungsmittel o.dgl. Es ist denkbar, dass der Roboter 12 eine, insbesondere wiederaufladbare, Energiespeichereinheit umfasst, die insbesondere einen Akku o.dgl. aufweist. Zusätzlich ist denkbar, dass das Robotersystem 10 eine Basisstation zu einem Wiederaufladen der Energiespeichereinheit umfasst und/oder dass der Roboter 12 zumindest eine Energieumwandlungseinheit, wie beispielsweise eine Solarzelle, zur Energieversorgung und/oder zum Wiederaufladen der Energiespeichereinheit umfasst.

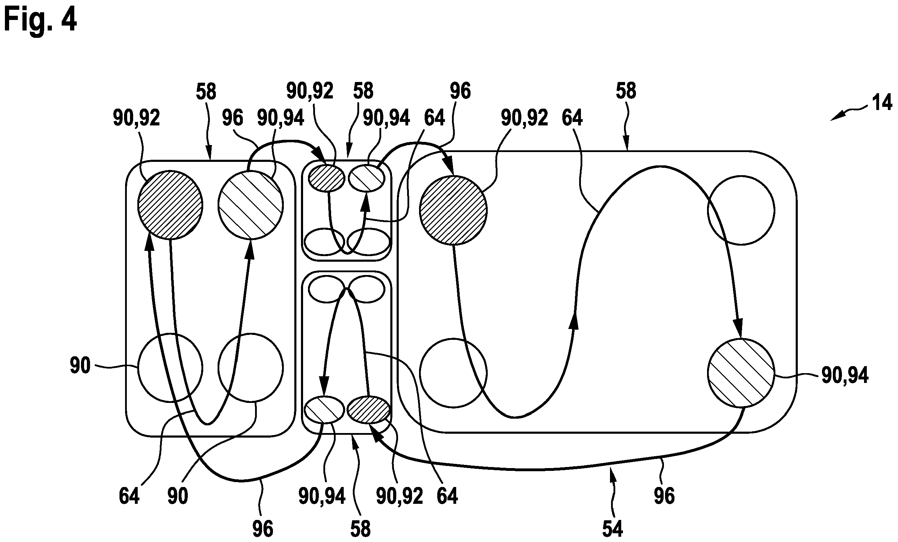

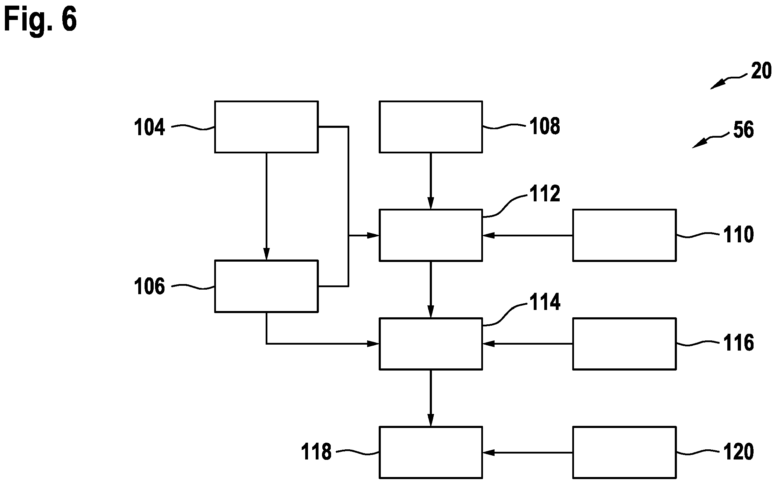

Die Steuer- und/oder Regeleinheit 34 ist dazu eingerichtet, die über die Benutzerinteraktionseinheit 42 übermittelte Bewertung des zumindest einen Teilabschnitts 44 zu einer, insbesondere zukünftigen, Steuerung des Roboters 12 zumindest innerhalb des zumindest einen Teilabschnitts 44, insbesondere für einen weiteren Bearbeitungszyklus, zu berücksichtigen. Insbesondere ist der Roboter 12 dazu vorgesehen, den weiteren Bearbeitungszyklus zeitlich nach der Bewertung durch den Benutzer auszuführen. Es ist denkbar, dass die Steuer- und/oder Regeleinheit 34 dazu eingerichtet ist, eine zukünftige Fortbewegungsstrecke 54 (siehe Figur 5) des Roboters 12 zur zumindest im Wesentlichen vollständigen Abdeckung des Arbeitsbereichs 14 während eines Bearbeitungszyklus, insbesondere in dem weiteren Bearbeitungszyklus und/oder zumindest innerhalb des bewerteten Teilabschnitts 44, in Abhängigkeit von der Bewertung des zumindest einen Teilabschnitts 44 zu ermitteln. Die Steuer- und/oder Regeleinheit 34 umfasst einen Algorithmus 56 (siehe Figur 6) zu einer Ermittlung der zukünftigen Fortbewegungsstrecke 54 des Roboters 12, insbesondere für einen, insbesondere zukünftigen, weiteren Bearbeitungszyklus, in Abhängigkeit von der Bewertung. Insbesondere umfasst der Algorithmus 56 eine Mehrzahl von Wegfindungsparametern, welche jeweils als eine Rahmenbedingung der Lösung des Problems des Handlungsreisenden oder einer Ermittlung einer einen Teilbereich 58, 60, 62 (siehe Figur 2) abdeckenden Strecke des Roboters 12 ausgebildet sind. Bevorzugt ist die Steuer- und/oder Regeleinheit 34 dazu eingerichtet, nach jedem Bearbeitungszyklus, insbesondere falls eine Bewertung eines Teilbereichs 58, 60, 62 übermittelt wurde, eine, insbesondere zukünftige, Steuerung des Roboters 12, insbesondere eine zukünftige Fortbewegungsstrecke 54 des Roboters 12, zumindest innerhalb des zumindest einen bewerteten Teilabschnitts 44 für einen weiteren Bearbeitungszyklus zu ermitteln. Insbesondere ist die Steuer- und/oder Regeleinheit 34 dazu eingerichtet, nach jedem Bearbeitungszyklus, insbesondere falls eine Bewertung eines Teilabschnitts 44 übermittelt wurde, den Algorithmus 56 auszuführen, wobei insbesondere eine zukünftige Fortbewegungsstrecke 54 des Roboters 12 zur zumindest im Wesentlichen vollständigen Abdeckung des Arbeitsbereichs 14 während eines Bearbeitungszyklus ermittelt wird. Vorzugsweise wird mittels des Algorithmus 56 über die hinterlegte und/oder erstellte virtuelle Karte 40 der Arbeitsbereich 14 ermittelt. Bevorzugt wird mittels des Algorithmus 56 der Arbeitsbereich 14, vorzugsweise in Abhängigkeit von der Bewertung und/oder von einer Position des bewerteten Teilabschnitts 44, in eine Mehrzahl an Teilbereichen 58, 60, 62 aufgeteilt. Vorzugsweise wird mittels des Algorithmus 56 über eine Methode der Morsetheorie in Abhängigkeit von einer Anordnung der Teilbereiche 58, 60, 62 zueinander und von der Bahnbreite 16 des Roboters 12, und vorzugsweise in Abhängigkeit von der Bewertung und/oder von einer Position des bewerteten Teilabschnitts 44, für jeden Teilbereich 58, 60, 62 eine zukünftige Fortbewegungsstrecke 64 (siehe Figuren 4 und 5) zur Abdeckung durch den Roboter 12 ermittelt. Besonders bevorzugt wird mittels des Algorithmus 56 aus den für die Teilbereiche 58, 60, 62 ermittelten zukünftigen Fortbewegungsstrecken 64, vorzugsweise in Abhängigkeit von der Bewertung und/oder von einer Position des bewerteten Teilabschnitts 44, die zukünftige Fortbewegungsstrecke 54 des Roboters 12 zur zumindest im Wesentlichen vollständigen Abdeckung des Arbeitsbereichs 14, insbesondere für einen nächsten Bearbeitungszyklus, ermittelt.

In Figur 2 ist die virtuelle Karte 40 eines beispielhaften Arbeitsbereichs 14 gezeigt. Der Arbeitsbereich 14 wird an einer äußeren Kante 66 des Arbeitsbereichs 14 durch Objekte oder durch eine Begrenzung des Robotersystems 10, beispielsweise ein Leiterkabel o.dgl., umschlossen. Es ist auch denkbar, dass der Arbeitsbereich 14 über eine virtuelle Begrenzung definiert wird. Der Arbeitsbereich 14 umschließt mehrere Bereiche 68, die nicht Teil des Arbeitsbereichs 14 sind und vorzugsweise nicht von dem Roboter 12 abgedeckt werden sollen. Der Arbeitsbereich 14 wurde mittels der Steuer- und/oder Regeleinheit 34 in eine Vielzahl von Teilbereichen 58, 60, 62 unterteilt, welche jeweils polygonförmig, insbesondere möglichst rechteckig und/oder viereckig oder dreieckig, ausgebildet sind. Die Teilbereiche 58, 60, 62 bilden zusammen den Arbeitsbereich 14, vorzugsweise ohne die vorher genannten Bereiche 68. Beispielsweise ist der Arbeitsbereich 14 als eine Zimmerbodenfläche ausgebildet. Es ist aber auch denkbar, dass der Arbeitsbereich 14 eine ganze Wohnungsbodenfläche umfasst. Insbesondere bei anderen Ausgestaltungen des Robotersystems 10 und/oder des Roboters 12, beispielsweise mit einem flugfähigen Roboter 12 und/oder mit einem geländetauglichen Roboter 12, sind auch dreidimensionale Ausgestaltungen der virtuellen Karte 40 und/oder des Arbeitsbereichs 14 denkbar. Vorzugsweise ist der Algorithmus 56 dazu vorgesehen, den Arbeitsbereich 14 in möglichst wenige Teilbereiche 58, 60, 62 und gleichzeitig möglichst viele rechteckige Teilbereiche 58, 60, 62 zu unterteilen, welche vorzugsweise zusammen möglichst vollständig den Arbeitsbereich 14 bilden.

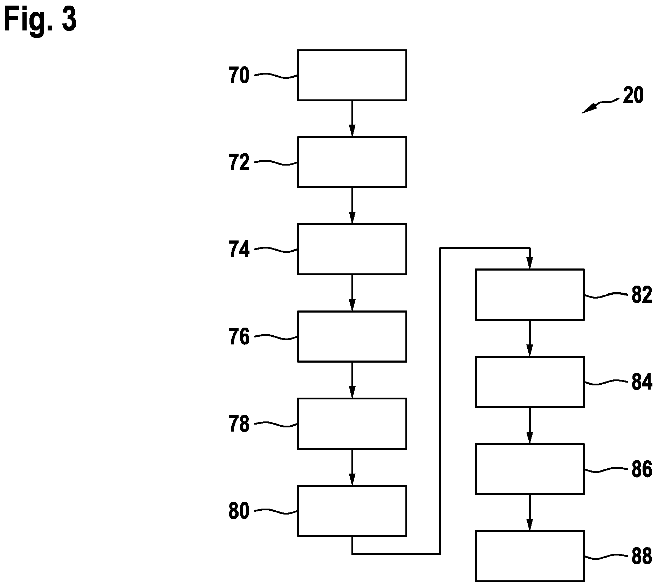

In Figur 3 ist ein beispielhafter Ablauf des Verfahrens 20 zur Steuerung, insbesondere Navigation, des angetrieben bewegbaren, insbesondere fahrbaren, Roboters 12 des Robotersystems 10 gezeigt. In einem Verfahrensschritt 70 des Verfahrens 20 wird die virtuelle Karte 40 des Arbeitsbereichs 14 in der Steuer- und/oder Regeleinheit 34 hinterlegt. Alternativ oder zusätzlich ist denkbar, dass, insbesondere in dem Verfahrensschritt 70 oder einem weiteren Verfahrensschritt, die virtuelle Karte 40 von der Steuer- und/oder Regeleinheit 34 erstellt wird. In einem weiteren Verfahrensschritt 72 des Verfahrens 20 wird der Roboter 12 mittels der Steuer- und/oder Regeleinheit 34 des Robotersystems 10 derart gesteuert, dass der Roboter 12 während eines Bearbeitungszyklus den Arbeitsbereich 14 zumindest im Wesentlichen vollständig abdeckt. In einem Verfahrensschritt des Verfahrens 20, insbesondere dem Verfahrensschritt 72, wird eine Fortbewegungsstrecke 64 des Roboters 12 innerhalb des Arbeitsbereichs 14 mittels der Steuer- und/oder Regeleinheit 34 jeweils für die Mehrzahl von verschiedenen den Arbeitsbereich 14 ausbildenden Teilbereichen 58, 60, 62 separat ermittelt. In einem Verfahrensschritt des Verfahrens 20, insbesondere dem Verfahrensschritt 72, wird mittels der Erfassungseinheit 22 des Robotersystems 10 die von dem Roboter 12, insbesondere während des Bearbeitungszyklus, zurückgelegte Strecke 24 in dem Arbeitsbereich 14 erfasst. Vorzugsweise wird die erfasste innerhalb des Arbeitsbereichs 14 zurückgelegte Strecke 24 des Roboters 12 mittels der Erfassungseinheit 22 an die Steuer- und/oder Regeleinheit 34 übertragen. Insbesondere in einer Ausgestaltung, bei der die Erfassungseinheit 22 und die Steuer- und/oder Regeleinheit 34 getrennt voneinander angeordnet sind, ist denkbar, dass die erfasste innerhalb des Arbeitsbereichs 14 zurückgelegte Strecke des Roboters 12 mittels der Kommunikationseinheit 36 von der Erfassungseinheit 22 an die Steuer- und/oder Regeleinheit 34 übertragen wird.

In einem weiteren Verfahrensschritt 74 des Verfahrens 20 wird die erfasste, insbesondere während des Bearbeitungszyklus innerhalb des Arbeitsbereichs 14, zurückgelegte Strecke 24 des Roboters 12 mittels der Steuer- und/oder Regeleinheit 34 in die virtuelle Karte 40 übertragen. In einem weiteren Verfahrensschritt 76 des Verfahrens 20 wird die virtuelle Karte 40 zusammen mit der erfassten, insbesondere während des Bearbeitungszyklus innerhalb des Arbeitsbereichs 14, zurückgelegten Strecke 24 des Roboters 12 mittels der Benutzerinteraktionseinheit 42 ausgegeben. Vorzugsweise wird die virtuelle Karte 40 zusammen mit der erfassten, insbesondere während des Bearbeitungszyklus innerhalb des Arbeitsbereichs 14, zurückgelegten Strecke 24 des Roboters 12 über die Anwendung an dem externen Gerät 50 ausgegeben, insbesondere dargestellt. In einem weiteren Verfahrensschritt 78 des Verfahrens 20, insbesondere nach dem Bearbeitungszyklus des Roboters 12, erfolgt mittels der Benutzerinteraktionseinheit 42 des Robotersystems 10 zumindest eine Bewertung von zumindest einem Teilabschnitt 44 der von dem Roboter 12 zurückgelegten Strecke 24 innerhalb der virtuellen Karte 40 durch einen Benutzer, wobei die zumindest eine Bewertung, vorzugsweise über die Kommunikationseinheit 36, an die Steuer- und/oder Regeleinheit 34 übermittelt wird. Die Bewertung des Teilabschnitts 44 erfolgt über die Anwendung 48 der Benutzerinteraktionseinheit 42 auf dem externen Gerät 50. Bevorzugt wird ein Signal des Benutzers über das externe Gerät 50 erkannt und über die Anwendung 48 als Bewertung interpretiert und/oder in die Bewertung umgewandelt. In einem Verfahrensschritt des Verfahrens 20, insbesondere dem Verfahrensschritt 78, erfolgt die Bewertung des Teilabschnitts 44 der von dem Roboter 12 zurückgelegten Strecke 24 mittels einer Auswahl und/oder einer Markierung des Teilabschnitts 44 auf einer über die Benutzerinteraktionseinheit 42, insbesondere an dem externen Gerät 50, ausgegebenen Abbildung der virtuellen Karte 40. In einem Verfahrensschritt des Verfahrens 20, insbesondere dem Verfahrensschritt 78, werden nach der Auswahl und/oder der Markierung des Teilabschnitts 44 dem Benutzer mittels der Benutzerinteraktionseinheit 42, insbesondere über die Anwendung 48, mehr als zwei verschiedene Bewertungsparameter zur Auswahl gegeben, wobei jeder der Bewertungsparameter jeweils zu einer Ermittlung der, insbesondere zukünftigen, Fortbewegungsstrecke 54, 64 des Roboters 12 über die Steuer- und/oder Regeleinheit 34 unterschiedlich berücksichtigt wird. In einem Verfahrensschritt des Verfahrens 20, insbesondere dem Verfahrensschritt 78, werden/wird nach der Auswahl und/oder der Markierung des zumindest einen Teilabschnitts 44 dem Benutzer mittels der Benutzerinteraktionseinheit 42 mehr als zwei verschiedene Bewertungsparameter zur Auswahl gegeben werden und/oder zumindest eine Eingabeaufforderung zu einer Eingabe zumindest eines Werts eines Bewertungsparameters ausgegeben, wobei zumindest ein Bewertungsparameter zumindest eine zeitliche Angabe umfasst, die mit einer Anordnung des Roboters 12 in dem jeweiligen Teilabschnitt 44 verknüpft ist.

In einem weiteren Verfahrensschritt 80 des Verfahrens 20 wird, insbesondere für einen weiteren Bearbeitungszyklus, mittels der Steuer- und/oder Regeleinheit 34 eine, insbesondere zukünftige, Fortbewegungsstrecke 54, 64 des Roboters 12 zumindest innerhalb des Teilabschnitts 44 in Abhängigkeit von der Bewertung ermittelt. Eine Ermittlung der, insbesondere zukünftigen, Fortbewegungsstrecke 54, 64 des Roboters 12 innerhalb des Arbeitsbereichs 14 mittels der Steuer- und/oder Regeleinheit 34 in Abhängigkeit von der Bewertung erfolgt über den Algorithmus 56, welcher mittels der Steuer- und/oder Regeleinheit 34 regelmäßig nach jedem beendeten Bearbeitungszyklus des Roboters 12 ausgeführt wird. Die Ermittlung der, insbesondere zukünftigen, Fortbewegungsstrecke 54, 64 des Roboters 12 innerhalb des Arbeitsbereichs 14 mittels der Steuer- und/oder Regeleinheit 34 erfolgt in Abhängigkeit von einer Mehrzahl von hinterlegten Bewertungen über ein maschinelles Lernverfahren.

Es ist denkbar, dass in einem weiteren Verfahrensschritt 82 des Verfahrens 20 nach einer, insbesondere negativen, Bewertung des Teilabschnitts 44 durch den Benutzer eine Aufteilung des Arbeitsbereichs 14 in Teilbereiche 58, 60, 62 angepasst wird, wobei insbesondere der bewertete Teilabschnitt 44 innerhalb eines angepassten Teilbereichs 60, 62 angeordnet ist. In einem weiteren Verfahrensschritt 84 des Verfahrens 20 wird nach der Bewertung des Teilabschnitts 44 durch den Benutzer ausschließlich eine, insbesondere zukünftige, Fortbewegungsstrecke 64 des Roboters 12 für einen Teilbereich 60, 62 der Mehrzahl an Teilbereichen 58, 60, 62 angepasst, welcher den bewerteten Teilabschnitt 44 umfasst. In einem Verfahrensschritt des Verfahrens 20, insbesondere dem Verfahrensschritt 84, wird mittels der Steuer- und/oder Regeleinheit 34 in Abhängigkeit von der Bewertung oder einer Mehrzahl an hinterlegten Bewertungen die virtuelle Karte 40 angepasst. In einem weiteren Verfahrensschritt 86 des Verfahrens 20 wird die Bewertung des Teilabschnitts 44 der von dem Roboter 12 zurückgelegten Strecke 24 in der Steuer- und/oder Regeleinheit 34 hinterlegt, wobei eine Ermittlung einer, insbesondere zukünftigen, Fortbewegungsstrecke 54, 64 des Roboters 12, vorzugsweise für einen zukünftigen Bearbeitungszyklus, innerhalb des Arbeitsbereichs 14 über die Steuer- und/oder Regeleinheit 34 in Abhängigkeit von eine Mehrzahl von in der Steuer- und/oder Regeleinheit 34 hinterlegten Bewertungen erfolgt.

In einem weiteren Verfahrensschritt 88 des Verfahrens 20 erfolgt der weitere Bearbeitungszyklus des Roboters 12 entlang der ermittelten Fortbewegungsstrecke 54 des Roboters 12, wobei der Arbeitsbereich 14 zumindest im Wesentlichen vollständig abgedeckt wird. Vorzugsweise erfolgt in einem weiteren Verfahrensschritt (in Figuren nicht gezeigt) des Verfahrens 20 eine Ermittlung einer, insbesondere zukünftigen, Fortbewegungsstrecke 54, 64 des Roboters 12 innerhalb des Arbeitsbereichs 14 über die Steuer- und/oder Regeleinheit 34 in Abhängigkeit von der Mehrzahl von in der Steuer- und/oder Regeleinheit 34 hinterlegten Bewertungen.

In Figur 4 ist eine Prinzipskizze eines Steuerungskonzepts zu einem Abfahren von Teilbereichen 58 des Arbeitsbereichs 14 durch den Roboter 12 anhand von vier verschiedenen Teilbereichen 58 gezeigt. Jeder Teilbereich 58 der vier Teilbereiche 58 umfasst jeweils vier Übergangspunkte 90, welche jeweils als Startpunkt 92 oder als Austrittspunkt 94 für eine Abdeckung des jeweiligen Teilbereichs 58 durch den Roboter 12 verwendet werden können. Bevorzugt erfolgt die Ermittlung der Fortbewegungsstrecke 64 des Roboters 12 für die einzelnen Teilbereiche 58 über eine Methode der Morsetheorie. Die, insbesondere zukünftige, Fortbewegungsstrecke 54 des Roboters 12 zur Abdeckung des Arbeitsbereichs 14 bildet sich dann aus einer Kombination der Fortbewegungsstrecken 64 für die einzelnen Teilbereiche 58 und Strecken 96, die sich jeweils zwischen einem Austrittspunkt 94 eines der Teilbereiche 58 und einem Startpunkt 92 eines weiteren, insbesondere als nächstes abzudeckenden, Teilbereichs 58 erstrecken, aus. Insbesondere werden alle Teilbereiche 58 in einer Reihenfolge nacheinander abgedeckt, insbesondere abgefahren. Vorzugsweise wird mittels der Steuer- und/oder Regeleinheit 34, insbesondere des Algorithmus 56, zu einer Ermittlung eines Startpunkts 92 und eines Austrittspunkts 94 für jeden Teilbereich 58 und zur Ermittlung der Reihenfolge der Teilbereiche 58 eine Lösung für das Problem des Handlungsreisenden bestimmt. Es ist denkbar, dass mittels der Steuer- und/oder Regeleinheit 34 eine Zuordnung der Übergangspunkte 90, jeweils als Startpunkt 92 oder als Austrittspunkt 94, und/oder eine Festlegung der Reihenfolge der Teilbereiche 58 in Abhängigkeit der Bewertung erfolgt.

In Figur 5 ist der bereits in Figur 2 gezeigte Arbeitsbereich 14 mit einer von dem Roboter 12 während des Bearbeitungszyklus zur vollständigen Abdeckung des Arbeitsbereichs 14 zurückgelegten Strecke 24 gezeigt. Die in der Figur 4 gezeigte Darstellung stellt eine beispielhafte Ausgestaltung einer dem Benutzer über die Benutzerinteraktionseinheit 42 ausgegebenen Darstellung dar. Der Roboter 12 deckt den Arbeitsbereich 14, insbesondere die einzelnen Teilbereiche 58, 60, 62 des Arbeitsbereichs 14, über ein Abfahren von zumindest im Wesentlichen parallel zueinander angeordneten, insbesondere geradlinigen, Bahnen 102 ab. An Rändern der Teilbereiche 58, 60, 62 und an Kanten 66 des Arbeitsbereichs 14 dreht der Roboter 12 in einer Kurve auf eine nächste geradlinige Bahn 102. Über die Benutzerinteraktionseinheit 42 wurden drei Teilabschnitte 44, 98 der von dem Roboter 12 zurückgelegten Strecke 24 durch den Benutzer markiert und bewertet. Für zwei Teilabschnitte 44 der drei Teilabschnitte 44, 98 wurde eine negative Bewertung vorgenommen. Für einen weiteren Teilabschnitt 98 der drei Teilabschnitte 44, 98 wurde eine positive Bewertung vorgenommen. Zusätzlich ist denkbar, dass dem Benutzer mittels der Benutzerinteraktionseinheit 42, vorzugsweise bei einer Auswahl und/oder einem Markieren der Teilabschnitte 44, 98, mehr als die zwei Bewertungsparameter (positive Bewertung und negative Bewertung) zur Auswahl gegeben werden. Insbesondere wird jeder der Bewertungsparameter jeweils zu einer Ermittlung der, insbesondere zukünftigen, Fortbewegungsstrecke 54, 64 des Roboters 12 über die Steuer- und/oder Regeleinheit 34 unterschiedlich berücksichtigt. Beispielsweise ist ein weiterer Bewertungsparameter, welcher insbesondere dem Benutzer mittels der Benutzerinteraktionseinheit 42 zur Auswahl gestellt wird, dazu vorgesehen, dass die Steuer- und/oder Regeleinheit 34 einen mit dem weiteren Bewertungsparameter markierten Teilabschnitt, insbesondere eine Fortbewegungsstrecke des Roboters 12 innerhalb dieses Teilabschnitts, als Vorbild zu einer Abdeckung eines anderen negativ bewerteten Teilabschnitts heranzieht, wobei bevorzugt zumindest ein Wegfindungsparameter, welcher dem Teilabschnitt zugeordnet ist, mittels der Steuer- und/oder Regeleinheit 34 auch für eine Ermittlung einer zukünftigen Fortbewegungsstrecke des Roboters 12 innerhalb des anderen Teilabschnitts herangezogen wird. In Figur 5 ist beispielhaft die Bahnbreite 16 des Roboters 12 gezeigt. Vorzugsweise werden/wird die, insbesondere zukünftige, Fortbewegungsstrecke 54 des Roboters 12 zur Abdeckung des Arbeitsbereichs 14 und/oder die, insbesondere zukünftigen, Fortbewegungsstrecken 64, insbesondere Teilbewegungspfade, des Roboters 12 zur Abdeckung der einzelnen Teilbereiche 58, 60, 62 in Abhängigkeit von der Bahnbreite 16 des Roboters 12 ermittelt, wobei insbesondere ein Abstand 100 der zumindest im Wesentlichen parallel zueinander angeordneten Bahnen 102 höchstens oder zumindest im Wesentlichen der Bahnbreite 16 entspricht.

In Figur 6 ist ein beispielhafter Ablauf des Algorithmus 56 gezeigt, welcher insbesondere mittels der Steuer- und/oder Regeleinheit 34 ausführbar ist. Der Algorithmus 56 ist zu einer Ermittlung einer, insbesondere zukünftigen, Fortbewegungsstrecke 54 des Roboters 12 zur zumindest im Wesentlichen vollständigen Abdeckung des Arbeitsbereichs 14 in Abhängigkeit von der Bewertung vorgesehen. In einem Schritt 104 des Algorithmus 56 wird die virtuelle Karte 40 abgerufen oder angepasst und abgerufen. Vorzugsweise wird der Arbeitsbereich 14, insbesondere eine Fläche des Arbeitsbereichs 14 und/oder Konturen des Arbeitsbereichs 14, innerhalb der virtuellen Karte 40 abgefragt und zu einer Einteilung der Teilbereiche 58, 60, 62 herangezogen. In einem weiteren Schritt 106 des Algorithmus 56 werden hinterlegte Bewertungen bzw. bewertete Teilabschnitte 44, 98 abgerufen. Vorzugsweise werden die Bewertungen und/oder die bewerteten Teilabschnitte 44, 98 anhand der abgerufenen virtuellen Karte 40 und/oder des abgerufenen Arbeitsbereichs 14 einer Position innerhalb des Arbeitsbereichs 14 zugeordnet. In einem weiteren Schritt 108 des Algorithmus 56 werden mittels des Roboters 12 und/oder der Erfassungseinheit 22 erfasste Daten, wie beispielsweise Hindernisse innerhalb des Arbeitsbereichs 14, und/oder dem Roboter 12 zugeordnete, insbesondere in der Steuer- und/oder Regeleinheit 34 hinterlegte, Rahmenbedingungen, wie beispielsweise eine vorgegebene Startzeit zur Bearbeitung des Arbeitsbereichs 14 o.dgl., abgerufen.

In einem weiteren Schritt 110 des Algorithmus 56 wird eine vorgegebene und/oder in der Steuer- und/oder Regeleinheit 34 hinterlegte Methode zur Einteilung des Arbeitsbereichs 14 in Teilbereiche 58, 60, 62 abgefragt. Es ist denkbar, dass die Methode zur Einteilung des Arbeitsbereichs 14 in Teilbereiche 58, 60, 62 beispielsweise bei einer Inbetriebnahme und/oder mittels der Benutzerinteraktionseinheit 42 übermittelt wird. Beispielsweise gibt die Methode zur Einteilung des Arbeitsbereichs 14 in Teilbereiche 58, 60, 62 mögliche Grundformen, beispielsweise höchstens viereckige Grundformen, für die Teilbereiche 58, 60, 62, minimale Flächen der einzelnen Teilbereiche 58, 60, 62 o. dgl. vor. Es ist auch denkbar, dass eine maximale Anzahl an parallelen Bahnen 102 vorgegeben wird, welche der Roboter 12 für jeden Teilbereich 58, 60, 62 abfahren soll. In einem weiteren Schritt 112 des Algorithmus 56 wird der Arbeitsbereich 14 in die Teilbereiche 58, 60, 62 aufgeteilt, vorzugsweise in Abhängigkeit von der abgerufenen virtuellen Karte 40 und/oder von dem Arbeitsbereich 14, von der abgerufenen Methode zur Einteilung des Arbeitsbereichs 14 in Teilbereiche 58, 60, 62, von den hinterlegten Bewertungen und/oder bewerteten Teilabschnitten 44, 98 und/oder von den abgerufenen Daten des Roboters 12 und/oder der Erfassungseinheit 22. Beispielsweise wird der Arbeitsbereich 14 derart aufgeteilt, dass ein negativ bewerteter Teilabschnitt 44, welcher in einem vorherigen Bearbeitungszyklus auf zwei Teilbereiche 58, 60, 62 aufgeteilt war, durch einen einzigen Teilbereich 58, 60, 62 umfasst wird. Bevorzugt wird in dem Schritt 112 des Algorithmus 56 eine Mehrzahl an Teilbereichen 58, 60, 62 ermittelt, welche zusammen zumindest im Wesentlichen vollständig den Arbeitsbereich 14 bilden.

In einem weiteren Schritt 114 des Algorithmus 56 wird mittels einer Morse-Funktion der Morsetheorie und mittels einer hinterlegten Bahnbreite 16 des Roboters 12 für jeden ermittelten Teilbereich 58, 60, 62 eine, insbesondere zukünftige, Fortbewegungsstrecke 64, insbesondere ein Teilbewegungspfad, des Roboters 12 ermittelt. Dazu wird in einem anderen Schritt 116 des Algorithmus 56 eine Methode zur Abdeckung von Teilbereichen 58, 60, 62 abgefragt. Es ist denkbar, dass die Methode zur Abdeckung von Teilbereichen 58, 60, 62 beispielsweise bei einer Inbetriebnahme und/oder mittels der Benutzerinteraktionseinheit 42 übermittelt wird. Beispielsweise gibt die Methode zur Abdeckung von Teilbereichen 58, 60, 62 eine Anordnung und/oder Ausrichtung der Bahnen 102 relativ zu einem, insbesondere vorgegebenen, Referenzpunkt des Arbeitsbereichs 14, zu einer längsten Kante des jeweiligen Teilbereichs 58, 60, 62 o. dgl. vor. Es ist auch denkbar, dass eine maximale Anzahl an parallelen Bahnen 102 vorgegeben wird, welche der Roboter 12 für jeden Teilbereich 58, 60, 62 abfahren soll. Alternativ oder zusätzlich ist denkbar, dass die Methode zur Abdeckung von Teilbereichen 58, 60, 62 einen maximalen Rotationswinkel des Roboters 12 vorgibt, um den sich der Roboter 12 zwischen einzelnen Bahnen 102 zur Abdeckung des jeweiligen Teilbereichs bewegt. Insbesondere werden in dem Schritt 114 des Algorithmus 56 Wegfindungsparameter berücksichtigt, welche beispielsweise durch die Methode zur Abdeckung von Teilbereichen 58, 60, 62 übermittelt werden. Es ist denkbar, dass in dem Schritt 114 des Algorithmus 56 eine Mehrzahl an, insbesondere zukünftigen, Fortbewegungsstrecken 64, insbesondere Teilbewegungspfaden, des Roboters 12 für jeden der Teilbereiche 58, 60, 62 ermittelt wird. Vorzugsweise werden die, insbesondere zukünftigen, Fortbewegungsstrecken 64 des Roboters 12 für die Teilbereiche 58, 60, 62 jeweils in Abhängigkeit von den abgefragten Bewertungen und/oder den bewerteten Teilabschnitten 44, 98 ermittelt. Beispielsweise wird in einem negativ bewerteten Teilabschnitt 44 eines Teilbereichs 58, 60, 62 oder in dem gesamten Teilbereich 58, 60, 62 eine, insbesondere zukünftige, Fortbewegungsstrecke 64 des Roboters 12 ermittelt, die sich von einer von dem Roboter 12 zurückgelegten Strecke 24 in einem Bearbeitungszyklus, welcher der Bewertung zugeordnet ist, unterscheidet. Beispielsweise wird in einem positiv bewerteten Teilabschnitt 98 eines Teilbereichs 58, 60, 62 oder in dem gesamten Teilbereich 58, 60, 62 eine, insbesondere zukünftige, Fortbewegungsstrecke 64 des Roboters 12 ermittelt, welche zumindest im Wesentlichen identisch zu einer zurückgelegten Strecke 24 des Roboters 12 in einem Bearbeitungszyklus, welcher der Bewertung zugeordnet ist, ausgebildet ist. Vorzugsweise werden jedem Teilbereich 58, 60, 62 und/oder jeder ermittelten Fortbewegungsstrecke 64, insbesondere jedem Teilbewegungspfad, zu einer Abdeckung der Teilbereiche 58, 60, 62 jeweils zumindest ein Startpunkt 92 und zumindest ein Austrittspunkt 94 zugeordnet.

In einem weiteren Schritt 118 des Algorithmus 56 wird eine, insbesondere zukünftige, Fortbewegungsstrecke 54 des Roboters 12 für eine zumindest im Wesentlichen vollständige Abdeckung des Arbeitsbereichs 14, insbesondere aller Teilbereiche 58, 60, 62, ermittelt, insbesondere in Abhängigkeit von den möglichen Startpunkten 92 und Austrittpunkten 94 der Teilbereiche 58, 60, 62 und/oder der ermittelten Fortbewegungsstrecken 64. Vorzugsweise wird in dem Schritt 118 des Algorithmus 56 zu einer Ermittlung der, insbesondere zukünftigen, Fortbewegungsstrecke 54 des Roboters 12 für eine zumindest im Wesentlichen vollständige Abdeckung des Arbeitsbereichs 14 eine Lösung des Problems des Handelsreisenden ermittelt, wobei insbesondere die Startpunkte 92 und die Austrittspunkte 94 der Teilbereiche 58, 60, 62 und/oder der ermittelten Fortbewegungsstrecken 64 als Grundannahmen von Reisestationen herangezogen werden. Insbesondere wird bei der Lösung des Problems des Handelsreisenden eine gesamte Länge der, insbesondere zukünftigen, Fortbewegungsstrecke 54 des Roboters 12 für eine zumindest im Wesentlichen vollständige Abdeckung des Arbeitsbereichs 14 minimiert. Es ist denkbar, dass zur Lösung des Problems des Handelsreisenden abgefragte Bewertungen und/oder bewertete Teilabschnitte 44, 98 berücksichtigt werden. Beispielsweise wird ein negativ bewerteter Teilabschnitt 44, welcher in einem Bearbeitungszyklus, dem die Bewertung zugeordnet ist, einen Startpunkt 92, einen Austrittspunkt 94 und/oder eine Zwischenstrecke des Roboters 12 von einem Austrittspunkt 94 eines Teilbereichs 58, 60, 62 zu einem Startpunkt 92 eines anderen Teilbereichs 58, 60, 62 umfasst hat, bei der Lösung des Problems des Handelsreisenden derart berücksichtigt, dass für die, insbesondere zukünftige, Fortbewegungsstrecke 54 des Roboters 12 für eine zumindest im Wesentlichen vollständige Abdeckung des Arbeitsbereichs 14 in einem Bereich dieses Teilabschnitts 44 keinen Startpunkt 92, keinen Austrittspunkt 94 und/oder keine Zwischenstrecke aufweist. Vorzugsweise wird, insbesondere vor dem Schritt 118 des Algorithmus 56, in einem weiteren Schritt 120 des Algorithmus 56 zur Ermittlung der, insbesondere zukünftigen, Fortbewegungsstrecke 54 des Roboters 12 für eine zumindest im Wesentlichen vollständige Abdeckung des Arbeitsbereichs 14 eine vorgegebene und/oder hinterlegte Methode zur Lösung des Problems des Handelsreisenden abgerufen, welche beispielsweise Grundannahmen vorgeben kann. Beispielsweise umfasst die Methode zur Lösung des Problems des Handelsreisenden zumindest einen Grenzwert zur Berücksichtigung von Bewertungen und/oder bewerteten Teilabschnitten 44, 98, welcher insbesondere eine Gewichtung der Bewertungen und/oder der bewerteten Teilabschnitte 44, 98 relativ zu anderen Grundannahmen zur Lösung des Problems des Handelsreisenden definiert. Alternativ oder zusätzlich ist denkbar, dass die Grundannahmen als eine maximale Anzahl von Drehungen des Roboters 12, als eine maximale Länge der Fortbewegungsstrecken 54, 64 des Roboters 12 innerhalb des Arbeitsbereichs 14, als eine maximale Dauer der Abdeckung des Arbeitsbereichs 14, insbesondere des Bearbeitungszyklus, als eine maximale Länge von an einem Stück gefahrenen geraden Bahnen 102 o. dgl. ausgebildet sind.

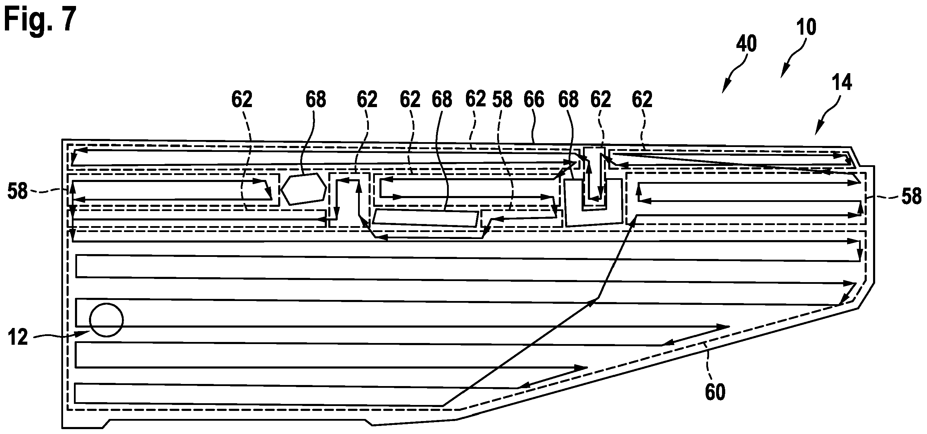

In Figur 7 ist der bereits in Figur 2 gezeigte Arbeitsbereich 14 mit einer beispielhaft mittels der Steuer- und/oder Regeleinheit 34, insbesondere des Algorithmus 56, in Abhängigkeit von der Bewertung angepassten Einteilung des Arbeitsbereichs 14 in Teilbereiche 58, 60, 62 und einer dementsprechend anderen beispielhaften Fortbewegungsstrecke des Roboters 12 zur Abdeckung des Arbeitsbereichs 14 gezeigt. Ein Teilbereich 60 der Teilbereiche 58, 60, 62, der den weiteren markierten und positiv bewerteten Teilabschnitt 98 umfasst (siehe Figur 5), wurde unverändert beibehalten. In Bereichen des Arbeitsbereichs 14, in denen jeweils die negativ bewerteten Teilabschnitte 44 angeordnet waren (vgl. Figur 5), wurde eine Einteilung der Teilbereiche 58, 60, 62 angepasst, wobei insbesondere die Teilabschnitte 44 auf mehrere verschiedene Teilbereiche 62 aufgeteilt wurden. Vorzugsweise kann so eine Änderung der zukünftigen Fortbewegungsstrecke 64 in den Teilabschnitten 44 erreicht werden. Bevorzugt wird eine ermittelte, insbesondere zukünftige, Fortbewegungsstrecke 54 in einem weiteren Bearbeitungszyklus abgefahren, wobei insbesondere eine in der Figur 7 gezeigte Einteilung der Teilbereiche 58, 60, 62 zur Ermittlung der Fortbewegungsstrecke 54, insbesondere einer Lösung des Problem des Handlungsreisenden, herangezogen wird, wobei diese dann mittels der Benutzerinteraktionseinheit 42 erneut durch den Benutzer bewertet werden kann. Vorzugsweise wurde eine Fortbewegungsstrecke des Roboters 12 zur Abdeckung des Arbeitsbereichs 14 durch die angepasste Einteilung des Arbeitsbereichs 14 geändert, wobei sich der Roboter 12 bevorzugt in den geänderten Teilbereichen 62, welche die negativ bewerteten Teilabschnitte 44 umfassen, auf einem anderen Pfad bewegt.

## Patentansprüche

1. Robotersystem, insbesondere teilautonomes Robotersystem, mit zumindest einem angetrieben bewegbaren, insbesondere fahrbaren, Roboter (12), der dazu vorgesehen ist, während eines Bearbeitungszyklus zumindest einen Arbeitsbereich (14) zumindest im Wesentlichen vollständig abzudecken, mit zumindest einer Erfassungseinheit (22), welche dazu vorgesehen ist, zumindest eine von dem Roboter (12) zurückgelegte Strecke (24) in dem Arbeitsbereich (14) zu erfassen, mit zumindest einer Steuer- und/oder Regeleinheit (34), die zumindest zu einer Steuerung des Roboters (12) innerhalb des Arbeitsbereichs (14) eingerichtet ist, wobei die Steuer- und/oder Regeleinheit (34) zumindest eine virtuelle Karte (40) des Arbeitsbereichs (14) aufweist und/oder dazu eingerichtet ist, eine virtuelle Karte (40) des Arbeitsbereichs (14) zu erzeugen, wobei die Steuer- und/oder Regeleinheit (34) dazu eingerichtet ist, die erfasste zurückgelegte Strecke (24) des Roboters (12) in die virtuelle Karte (40) zu übertragen, und mit zumindest einer Benutzerinteraktionseinheit (42), **dadurch gekennzeichnet, dass** die Benutzerinteraktionseinheit (42) dazu eingerichtet ist, insbesondere nach einem Bearbeitungszyklus des Roboters (12), zumindest eine Bewertung von zumindest einem Teilabschnitt (44, 98) der von dem Roboter (12) zurückgelegten Strecke (24), insbesondere innerhalb der virtuellen Karte (40), durch einen Benutzer zu ermöglichen und an die Steuer- und/oder Regeleinheit (34) zu übermitteln.

2. Robotersystem nach Anspruch 1, **dadurch gekennzeichnet, dass** die Steuer- und/oder Regeleinheit (34) dazu eingerichtet ist, die über die Benutzerinteraktionseinheit (42) übermittelte Bewertung des zumindest einen Teilabschnitts (44, 98) zu einer, insbesondere zukünftigen, Steuerung des Roboters (12) zumindest innerhalb des zumindest einen Teilabschnitts (44, 98), insbesondere für einen weiteren Bearbeitungszyklus, zu berücksichtigen.

3. Robotersystem nach Anspruch 1 oder 2, **dadurch gekennzeichnet, dass** die Benutzerinteraktionseinheit (42) zumindest ein Eingabemittel (46) zur Erfassung der Bewertung aufweist, welches dazu vorgesehen ist, die Bewertung über zumindest ein haptisches, optisches und/oder akustisches Signal zu erfassen, wobei die Steuer- und/oder Regeleinheit (34) dazu eingerichtet ist, dem erfassten Signal zumindest eine Position im Arbeitsbereich (14) und/oder einen Zeitpunkt im Bearbeitungszyklus zuzuordnen.

4. Robotersystem nach einem der vorhergehenden Ansprüche, **dadurch gekennzeichnet, dass** die Benutzerinteraktionseinheit (42) zumindest eine Anwendung (48) zu einer Ausführung auf einem externen Gerät (50), wie beispielsweise einem Smartphone, umfasst, die dazu eingerichtet ist, die Bewertung durch den Benutzer über das externe Gerät (50) zu ermöglichen.

5. Verfahren zur Steuerung, insbesondere Navigation, eines angetrieben bewegbaren, insbesondere fahrbaren, Roboters (12) eines Robotersystems (10), insbesondere eines Robotersystems (10) nach einem der vorhergehenden Ansprüche, wobei in zumindest einem Verfahrensschritt (72) der Roboter (12) mittels zumindest einer Steuer- und/oder Regeleinheit (34) des Robotersystems (10) derart gesteuert wird, dass der Roboter (12) während eines Bearbeitungszyklus zumindest einen Arbeitsbereich (14) zumindest im Wesentlichen vollständig abdeckt, wobei in zumindest einem Verfahrensschritt (70) eine virtuelle Karte (40) des Arbeitsbereichs (14) in der Steuer- und/oder Regeleinheit (34) hinterlegt wird und/oder von der Steuer- und/oder Regeleinheit (34) erstellt wird, wobei in zumindest einem Verfahrensschritt (72) mittels einer Erfassungseinheit (22) des Robotersystems (10) zumindest eine von dem Roboter (12) zurückgelegte Strecke (24) in dem Arbeitsbereich (14) erfasst wird, wobei in zumindest einem Verfahrensschritt (74) die erfasste zurückgelegte Strecke (24) des Roboters (12) in die virtuelle Karte (40) übertragen wird, **dadurch gekennzeichnet, dass** in zumindest einem Verfahrensschritt (78), insbesondere nach einem Bearbeitungszyklus des Roboters (12), mittels zumindest einer Benutzerinteraktionseinheit (42) des Robotersystems (10) zumindest eine Bewertung von zumindest einem Teilabschnitt (44, 98) der von dem Roboter (12) zurückgelegten Strecke (24), insbesondere innerhalb der virtuellen Karte (40), durch einen Benutzer erfolgt, wobei die zumindest eine Bewertung an die Steuer- und/oder Regeleinheit (34) übermittelt wird.

6. Verfahren nach Anspruch 5, **dadurch gekennzeichnet, dass** in zumindest einem Verfahrensschritt (80), insbesondere für einen weiteren Bearbeitungszyklus, mittels der Steuer- und/oder Regeleinheit (34) eine, insbesondere zukünftige, Fortbewegungsstrecke (54, 64) des Roboters (12) zumindest innerhalb des zumindest einen Teilabschnitts (44, 98) in Abhängigkeit von der Bewertung ermittelt wird.

7. Verfahren nach Anspruch 5 oder 6, **dadurch gekennzeichnet, dass** in zumindest einem Verfahrensschritt (78) die Bewertung des zumindest einen Teilabschnitts (44, 98) der von dem Roboter (12) zurückgelegten Strecke (24) mittels einer Auswahl und/oder einer Markierung des Teilabschnitts (44, 98) auf einer über die Benutzerinteraktionseinheit (42) ausgegebenen Abbildung der virtuellen Karte (40) erfolgt.

8. Verfahren nach den Ansprüchen 6 und 7, **dadurch gekennzeichnet, dass** in zumindest einem Verfahrensschritt (78) nach einer Auswahl und/oder einer Markierung des zumindest einen Teilabschnitts (44, 98) dem Benutzer mittels der Benutzerinteraktionseinheit (42) mehr als zwei verschiedene Bewertungsparameter zur Auswahl gegeben werden, wobei jeder der Bewertungsparameter jeweils zu einer Ermittlung der, insbesondere zukünftigen, Fortbewegungsstrecke (54, 64) des Roboters (12) über die Steuer- und/oder Regeleinheit (34) unterschiedlich berücksichtigt wird.

9. Verfahren nach einem der vorhergehenden Ansprüche, **dadurch gekennzeichnet, dass** in zumindest einem Verfahrensschritt (72) eine Fortbewegungsstrecke (54, 64) des Roboters (12) innerhalb des Arbeitsbereichs (14) mittels der Steuer- und/oder Regeleinheit (34) jeweils für eine Mehrzahl von verschiedenen den Arbeitsbereich (14) ausbildenden Teilbereichen (58, 60, 62) separat ermittelt wird, wobei in zumindest einem weiteren Verfahrensschritt (84) nach einer Bewertung des Teilabschnitts (44, 98) durch den Benutzer ausschließlich eine, insbesondere zukünftige, Fortbewegungsstrecke (54, 64) des Roboters (12) für einen Teilbereich (58, 60, 62) angepasst wird, welcher den bewerteten Teilabschnitt (44, 98) umfasst.

10. Verfahren nach einem der vorhergehenden Ansprüche, **dadurch gekennzeichnet, dass** in zumindest einem Verfahrensschritt (72) eine Fortbewegungsstrecke (54, 64) des Roboters (12) innerhalb des Arbeitsbereichs (14) mittels der Steuer- und/oder Regeleinheit (34) jeweils für eine Mehrzahl von verschiedenen den Arbeitsbereich (14) ausbildenden Teilbereichen (58, 60, 62) separat ermittelt wird, wobei in zumindest einem weiteren Verfahrensschritt (82) nach einer, insbesondere negativen, Bewertung eines Teilabschnitts (44, 98) durch den Benutzer eine Aufteilung des Arbeitsbereichs (14) in Teilbereiche (58, 60, 62) angepasst wird, wobei insbesondere der bewertete Teilabschnitt (44, 98) innerhalb eines angepassten Teilbereichs (58, 60, 62) angeordnet ist.

11. Verfahren nach einem der vorhergehenden Ansprüche, **dadurch gekennzeichnet, dass** in zumindest einem Verfahrensschritt (86) zumindest eine Bewertung von zumindest einem Teilabschnitt (44, 98) der von dem Roboter (12) zurückgelegten Strecke (24) in der Steuer- und/oder Regeleinheit (34) hinterlegt wird, wobei eine Ermittlung einer, insbesondere zukünftigen, Fortbewegungsstrecke (54, 64) des Roboters (12) innerhalb des Arbeitsbereichs (14) über die Steuer- und/oder Regeleinheit (34) in Abhängigkeit von eine Mehrzahl von in der Steuer- und/oder Regeleinheit (34) hinterlegten Bewertungen erfolgt.

12. Verfahren nach einem der vorhergehenden Ansprüche, **dadurch gekennzeichnet, dass** eine Ermittlung einer, insbesondere zukünftigen, Fortbewegungsstrecke (54, 64) des Roboters (12) innerhalb des Arbeitsbereichs (14) mittels der Steuer- und/oder Regeleinheit (34) in Abhängigkeit von der zumindest einen Bewertung über einen Algorithmus (56) erfolgt, welcher regelmäßig nach jedem beendeten Bearbeitungszyklus des Roboters (12) ausgeführt wird.

13. Verfahren nach einem der vorhergehenden Ansprüche, **dadurch gekennzeichnet, dass** eine Ermittlung einer, insbesondere zukünftigen, Fortbewegungsstrecke (54, 64) des Roboters (12) innerhalb des Arbeitsbereichs (14) mittels der Steuer- und/oder Regeleinheit (34) in Abhängigkeit von einer Mehrzahl von hinterlegten Bewertungen über ein maschinelles Lernverfahren erfolgt.

14. Verfahren zumindest nach den Ansprüchen 5 und 6, **dadurch gekennzeichnet, dass** in zumindest einem Verfahrensschritt (78) nach einer Auswahl und/oder einer Markierung des zumindest einen Teilabschnitts (44, 98) dem Benutzer mittels der Benutzerinteraktionseinheit (42) mehr als zwei verschiedene Bewertungsparameter zur Auswahl gegeben werden und/oder zumindest eine Eingabeaufforderung zu einer Eingabe zumindest eines Werts eines Bewertungsparameters ausgegeben wird, wobei zumindest ein Bewertungsparameter zumindest eine zeitliche Angabe umfasst, die mit einer Anordnung des Roboters (12) in dem jeweiligen Teilabschnitt (44, 98) verknüpft ist.

15. Verfahren nach einem der vorhergehenden Ansprüche, **dadurch gekennzeichnet, dass** in zumindest einem Verfahrensschritt (84) mittels der Steuer- und/oder Regeleinheit (34) in Abhängigkeit von der zumindest einen Bewertung die virtuelle Karte (40) angepasst wird.

## Claims

1. Robot system, in particular semi-autonomous robot system, having at least one driven movable, in particular driveable, robot (12), which is provided to at least substantially completely cover at least one work region (14) during a processing cycle, having at least one capturing unit (22) which is provided to capture at least one distance (24) in the work region (14) that has been travelled by the robot (12), having at least one open-loop and/or closed-loop control unit (34) which is configured at least to control the robot (12) within the work region (14), wherein the open-loop and/or closed-loop control unit (34) has at least one virtual map (40) of the work region (14) and/or is configured to generate a virtual map (40) of the work region (14), wherein the open-loop and/or closed-loop control unit (34) is configured to transfer the captured distance (24) travelled by the robot (12) into the virtual map (40), and having at least one user interaction unit (42), **characterized in that** the user interaction unit (42) is configured to enable, in particular after a processing cycle of the robot (12), at least one assessment of at least one partial section (44, 98) of the distance (24) travelled by the robot (12), in particular within the virtual map (40), by way of a user and to transmit it to the open-loop and/or closed-loop control unit (34).

2. Robot system according to Claim 1, **characterized in that** the open-loop and/or closed-loop control unit (34) is configured to take into account the assessment of the at least one partial section (44, 98), which is transmitted via the user interaction unit (42), for an, in particular future, control of the robot (12) at least within the at least one partial section (44, 98), in particular for a further processing cycle.

3. Robot system according to Claim 1 or 2, **characterized in that** the user interaction unit (42) has at least one input means (46) for recording the assessment, which is provided to record the assessment via at least one haptic, visual and/or acoustic signal, wherein the open-loop and/or closed-loop control unit (34) is configured to assign at least one position in the work region (14) and/or a time point in the processing cycle to the recorded signal.

4. Robot system according to any of the preceding claims, **characterized in that** the user interaction unit (42) comprises at least one application (48) for execution on an external device (50), such as for example a smartphone, which application is configured to enable the assessment by way of the user via the external device (50) .

5. Method for controlling, in particular navigating, a driven movable, in particular driveable, robot (12) of a robot system (10), in particular of a robot system (10) according to any of the preceding claims, wherein in at least one method step (72) the robot (12) is controlled by means of at least one open-loop and/or closed-loop control unit (34) of the robot system (10) in such a manner that the robot (12) at least substantially completely covers at least one work region (14) during a processing cycle, wherein in at least one method step (70) a virtual map (40) of the work region (14) is stored in the open-loop and/or closed-loop control unit (34) and/or is created by the open-loop and/or closed-loop control unit (34), wherein in at least one method step (72) at least one distance (24) in the work region (14) travelled by the robot (12) is captured by means of a capturing unit (22) of the robot system (10), wherein in at least one method step (74) the captured distance (24) travelled by the robot (12) is transferred into the virtual map (40), **characterized in that** in at least one method step (78), in particular after a processing cycle of the robot (12), at least one assessment of at least one partial section (44, 98) of the distance (24) travelled by the robot (12), in particular within the virtual map (40), is carried out by way of a user by means of at least one user interaction unit (42) of the robot system (10), wherein the at least one assessment is transmitted to the open-loop and/or closed-loop control unit (34).

6. Method according to Claim 5, **characterized in that** in at least one method step (80) the open-loop and/or closed-loop control unit (34) is used to ascertain an, in particular future, locomotion distance (54, 64) of the robot (12) at least within the at least one partial section (44, 98) in dependence on the assessment, in particular for a further processing cycle.

7. Method according to Claim 5 or 6, **characterized in that** in at least one method step (78) the assessment of the at least one partial section (44, 98) of the distance (24) travelled by the robot (12) takes place by means of a selection and/or marking of the partial section (44, 98) on an image representation of the virtual map (40) that is output via the user interaction unit (42).

8. Method according to Claims 6 and 7, **characterized in that** in at least one method step (78), after a selection and/or marking of the at least one partial section (44, 98), more than two different assessment parameters are provided for selection to the user by means of the user interaction unit (42), wherein each of the assessment parameters is taken into account differently in each case for ascertaining the, in particular future, locomotion distance (54, 64) of the robot (12) via the open-loop and/or closed-loop control unit (34).

9. Method according to any of the preceding claims, **characterized in that** in at least one method step (72) a locomotion distance (54, 64) of the robot (12) within the work region (14) is ascertained separately in each case for a plurality of different partial regions (58, 60, 62) that form the work region (14) by means of the open-loop and/or closed-loop control unit (34), wherein in at least one further method step (84), after assessment of the partial section (44, 98) by way of the user, exclusively one, in particular future, locomotion distance (54, 64) of the robot (12) is adapted for a partial region (58, 60, 62) that comprises the assessed partial section (44, 98) .

10. Method according to any of the preceding claims, **characterized in that** in at least one method step (72) a locomotion distance (54, 64) of the robot (12) within the work region (14) is ascertained separately in each case for a plurality of different partial regions (58, 60, 62) that form the work region (14) by means of the open-loop and/or closed-loop control unit (34), wherein in at least one further method step (82), after an, in particular negative, assessment of a partial section (44, 98) by way of the user, a division of the work region (14) into partial regions (58, 60, 62) is adapted, wherein in particular the assessed partial section (44, 98) is arranged within an adapted partial region (58, 60, 62).

11. Method according to any of the preceding claims, **characterized in that** in at least one method step (86) at least one assessment of at least one partial section (44, 98) of the distance (24) travelled by the robot (12) is stored in the open-loop and/or closed-loop control unit (34), wherein an ascertainment of an, in particular future, locomotion distance (54, 64) of the robot (12) within the work region (14) via the open-loop and/or closed-loop control unit (34) takes place in dependence on a plurality of assessments stored in the open-loop and/or closed-loop control unit (34).

12. Method according to any of the preceding claims, **characterized in that** an ascertainment of an, in particular future, locomotion distance (54, 64) of the robot (12) within the work region (14) by means of the open-loop and/or closed-loop control unit (34) in dependence on the at least one assessment takes place via an algorithm (56) which is carried out as a rule after each finished processing cycle of the robot (12).

13. Method according to any of the preceding claims, **characterized in that** an ascertainment of an, in particular future, locomotion distance (54, 64) of the robot (12) within the work region (14) by means of the open-loop and/or closed-loop control unit (34) in dependence on a plurality of stored assessments takes place via a machine learning method.

14. Method at least according to Claims 5 and 6, **characterized in that** in at least one method step (78), after a selection and/or marking of the at least one partial section (44, 98), more than two different assessment parameters are provided for selection to the user by means of the user interaction unit (42) and/or at least one input request for entering at least one value of an assessment parameter is output, wherein at least one assessment parameter comprises at least one piece of time information that is linked to an arrangement of the robot (12) in the respective partial section (44, 98).

15. Method according to any of the preceding claims, **characterized in that** in at least one method step (84) the virtual map (40) is adapted in dependence on the at least one assessment by means of the open-loop and/or closed-loop control unit (34).

## Revendications

1. Système robotisé, en particulier système robotisé semi-autonome, comprenant au moins un robot (12) mobile de manière entraînée, notamment véhiculable, qui est prévu pour couvrir au moins sensiblement complètement au moins une zone de travail (14) pendant un cycle de traitement, au moins une unité de détection (22) qui est prévue pour détecter dans la zone de travail (14) au moins un itinéraire (24) parcouru par le robot (12), au moins une unité de commande et/ou de régulation (34) qui est conçue au moins pour commander le robot (12) à l'intérieur de la zone de travail (14), l'unité de commande et/ou de régulation (34) comportant au moins une carte virtuelle (40) de la zone de travail (14) et/ou étant conçue pour générer une carte virtuelle (40) de la zone de travail (14), l'unité de commande et/ou de régulation (34) étant conçue pour transmettre l'itinéraire parcouru détecté (24) du robot (12) à la carte virtuelle (40), et au moins une unité d'interaction utilisateur (42), **caractérisé en ce que** l'unité d'interaction utilisateur (42) est conçue pour permettre par le biais d'un utilisateur, notamment après un cycle de traitement du robot (12), au moins une évaluation d'au moins une portion (44, 98) de l'itinéraire (24) parcouru par le robot (12), notamment à l'intérieur de la carte virtuelle (40), et la transmettre à l'unité de commande et/ou de régulation (34) .

2. Système robotisé selon la revendication 1, **caractérisé en ce que** l'unité de commande et/ou de régulation (34) est conçue pour prendre en compte l'évaluation de l'au moins une portion (44, 98), transmise par le biais de l'unité d'interaction utilisateur (42), dans une commande, notamment future, du robot (12) au moins à l'intérieur de l'au moins une portion (44, 98), en particulier en vue d'un autre cycle de traitement.

3. Système robotisé selon la revendication 1 ou 2, **caractérisé en ce que** l'unité d'interaction utilisateur (42) comporte au moins un moyen d'entrée (46) destiné à détecter l'évaluation, lequel moyen d'entrée est prévu pour détecter l'évaluation par le biais d'au moins un signal haptique, optique et/ou acoustique, l'unité de commande et/ou de régulation (34) étant conçue pour associer au signal détecté au moins une position dans la zone de travail (14) et/ou un instant dans le cycle de traitement.

4. Système robotisé selon l'une des revendications précédentes, **caractérisé en ce que** l'unité d'interaction utilisateur (42) comprend au moins une application (48) destinée à être exécutée sur un appareil extérieur (50), comme par exemple un Smartphone, qui est conçu pour permettre l'évaluation par le biais de l'utilisateur sur l'appareil extérieur (50) .

5. Procédé de commande, notamment de navigation, d'un robot (12) mobile de manière entraînée, notamment véhiculable, d'un système robotisé (10), notamment d'un système robotisé (10) selon l'une des revendications précédentes, le robot (12) étant commandé, dans au moins une étape de procédé (72), au moyen d'au moins une unité de commande et/ou de régulation (34) du système robotisé (10) de manière à ce que le robot (12) couvre sensiblement complètement au moins une zone de travail (14) pendant un cycle de traitement, une carte virtuelle (40) de la zone de travail (14) étant, dans au moins une étape de procédé (70), stockée dans l'unité de commande et/ou de régulation (34) et/ou créée par l'unité de commande et/ou de régulation (34), une unité de détection (22) du système robotisé (10) détectant, dans au moins une étape de procédé (72), dans la zone de travail (14) au moins un itinéraire (24) parcouru par le robot (12), l'itinéraire parcouru détecté (24) du robot (12) étant transmis, dans au moins une étape de procédé (74), à la carte virtuelle (40), **caractérisé en ce que**, dans au moins une étape de procédé (78), en particulier après un cycle de traitement du robot (12), au moins une évaluation d'au moins une portion (44, 98) de l'itinéraire (24) parcouru par le robot (12) est effectuée par un utilisateur notamment à l'intérieur de la carte virtuelle (40) au moyen d'au moins une unité d'interaction utilisateur (42) du système robotisé (10), l'au moins une évaluation étant transmise à l'unité de commande et/ou de régulation (34).

6. Procédé selon la revendication 5, **caractérisé en ce que**, dans au moins une étape de procédé (80), en particulier pour un autre cycle de traitement, un itinéraire d'avancement (54, 64), notamment futur, du robot (12) est déterminé au moins à l'intérieur de l'au moins une portion (44, 98) en fonction de l'évaluation au moyen de l'unité de commande et/ou de régulation (34) .

7. Procédé selon la revendication 5 ou 6, **caractérisé en ce que**, dans au moins une étape de procédé (78), l'évaluation de l'au moins une portion (44, 98) de l'itinéraire (24) parcouru par le robot (12) est effectuée sur une reproduction de la carte virtuelle (40) délivrée par l'unité d'interaction utilisateur (42) au moyen d'une sélection et/ou d'un marquage de la portion (44, 98).

8. Procédé selon les revendications 6 et 7, **caractérisé en ce que**, dans au moins une étape de procédé (78), plus de deux paramètres d'évaluation sont proposés au choix de l'utilisateur au moyen de l'unité d'interaction utilisateur (42) après sélection et/ou marquage de l'au moins une portion (44, 98), chacun des paramètres d'évaluation étant pris en compte par l'unité de commande et/ou de régulation (34) pour déterminer l'itinéraire d'avancement (54, 64), notamment futur, du robot (12).

9. Procédé selon l'une des revendications précédentes, **caractérisé en ce que**, dans au moins une étape de procédé (72), un itinéraire d'avancement (54, 64) du robot (12) à l'intérieur de la zone de travail (14) est déterminé à chaque fois séparément pour une pluralité de sous-zones différentes (58, 60, 62) formant la zone de travail (14) au moyen de l'unité de commande et/ou de régulation (34), un seul itinéraire d'avancement (54, 64), en particulier futur, du robot (12) étant adapté, dans au moins une autre étape de procédé (84), à une sous-zone (58, 60, 62), qui comprend la portion évaluée (44, 98), après une évaluation de la portion (44, 98) par l'utilisateur.

10. Procédé selon l'une des revendications précédentes, **caractérisé en ce que**, dans au moins une étape de procédé (72), un itinéraire d'avancement (54, 64) du robot (12) à l'intérieur de la zone de travail (14) est déterminé à chaque fois séparément pour une pluralité de sous-zones différentes (58, 60, 62), formant la zone de travail (14), au moyen de l'unité de commande et/ou de régulation (34), une division de la zone de travail (14) en sous-zones (58, 60, 62) étant ajustée, dans au moins une autre étape de procédé (82), après une évaluation, notamment négative, d'une portion (44, 98) par l'utilisateur, la portion évaluée (44, 98) étant en particulier située dans une portion ajustée (58, 60, 62).

11. Procédé selon l'une des revendications précédentes, **caractérisé en ce que**, dans au moins une étape de procédé (86), au moins une évaluation d'au moins une portion (44, 98) de l'itinéraire (24) parcouru par le robot (12) est stockée dans l'unité de commande et/ou de régulation (34), une détermination d'un itinéraire d'avancement (54, 64), en particulier futur, du robot (12) à l'intérieur de la zone de travail (14) étant effectuée par le biais de l'unité de commande et/ou de régulation (34) en fonction d'une pluralité d'évaluations stockées dans l'unité de commande et/ou de régulation (34).

12. Procédé selon l'une des revendications précédentes, **caractérisé en ce qu'**une détermination d'un itinéraire d'avancement (54, 64), notamment futur, du robot (12) à l'intérieur de la zone de travail (14) est effectuée au moyen de l'unité de commande et/ou de régulation (34) en fonction de l'au moins une évaluation à l'aide d'un algorithme (56) qui est régulièrement exécuté après chaque cycle de traitement terminé du robot (12).

13. Procédé selon l'une des revendications précédentes, **caractérisé en ce qu'**une détermination d'un itinéraire d'avancement (54, 64), notamment futur, du robot (12) à l'intérieur de la zone de travail (14) est effectuée par le biais d'un processus d'apprentissage automatique au moyen de l'unité de commande et/ou de régulation (34) en fonction d'une pluralité d'évaluations stockées.

14. Procédé au moins selon les revendications 5 et 6, **caractérisé en ce que**, dans au moins une étape de procédé (78), plus de deux paramètres d'évaluation différents sont proposés au choix de l'utilisateur au moyen de l'unité d'interaction utilisateur (42) et/ou au moins une demande d'entrée pour entrer au moins une valeur d'un paramètre d'évaluation est délivrée en sortie, après une sélection et/ou un marquage de l'au moins une portion (44, 98), au moins un paramètre d'évaluation comprenant au moins une donnée temporelle qui est liée à une disposition du robot (12) dans la portion respective (44, 98).

15. Procédé selon l'une des revendications précédentes, **caractérisé en ce que** la carte virtuelle (40) est adaptée, dans au moins une étape de procédé (84), au moyen de l'unité de commande et/ou de régulation (34) en fonction de l'au moins une évaluation.
